# EUROPÄISCHE PATENTSCHRIFT

(11) **EP 2 407 079 B1**
(45) Veröffentlichungstag und Bekanntmachung des Hinweises auf die Patenterteilung: **10.04.2019**
(21) Anmeldenummer: 11172462.1
(22) Anmeldetag: 04.07.2011
(51) Int. Cl.: A47L 15/42, C09J 5/06, C09J 195/00

(54) **Verfahren zur Herstellung einer Geschirrspülmaschine mit mindestens einer, insbesondere vorkonfektionierten, Bitumenmatte zur Entdröhnung und/oder Schallbedämmung eines Bauteils**
Method for producing a dishwasher with at least one, in particular pre-assembled bitumen pad for muffling and/or soundproofing a component
Procédé de fabrication d'un lave-vaisselle avec au moins une plaque de béton, notamment préconfectionnée, pour l'amortissement et/ou l'insonorisation d'un composant

(30) Priorität: 16.07.2010 DE 102010031487
(43) Veröffentlichungstag der Anmeldung: 18.01.2012
(73) Patentinhaber: BSH Hausgeräte GmbH, 81739 München (DE)
(72) Erfinder: Fritz, Heiko, 89542 Herbrechtingen (DE); Schwenk, Bernd, 89415 Lauingen (DE)

(56) Entgegenhaltungen:
- EP-A1- 0 346 673
- EP-A2- 1 291 271
- DE-A1-102007 033 214
- DE-A1-102007 062 514
- GB-A- 1 065 591
- Christine Achten: "Bitumen", , 1. Dezember 2009 (2009-12-01), Seiten 1-2, XP055223913, Gefunden im Internet: URL:https://roempp.thieme.de/roempp4.0/do/ data/RD-02-01769 [gefunden am 2015-10-27]

## Beschreibung

Die vorliegende Erfindung betrifft ein Verfahren zur Herstellung einer Geschirrspülmaschine, insbesondere einer Haushaltsgeschirrspülmaschine, gemäß Anspruch 1 mit wenigstens einem, welches mit wenigstens einer Bitumenmatte, insbesondere einer vorkonfektionierten, Bitumenmatte, zur Entdröhnung und/oder Schallbedämmung des Bauteils versehen ist, wobei das Bauteil ein Kunststoffbauteil aus Polypropylen ist und wobei die Bitumenmatte auf das Kunststoffbauteil aus Polypropylen aufgeklebt wird.

Die Verwendung von vorkonfektionierten Bitumenmatten zur Entdröhnung von Bauteilen einer Geschirrspülmaschine ist aus der Praxis bekannt. Gleichwohl konnten bislang keine Mittel gefunden werden, welche eine einfache und dauerhafte Befestigung der Bitumenmatte an dem jeweiligen Bauteil bewirken.

Die Druckschrift DE 10 2007 062 514 A1 offenbart einen thermoplastisch und nicht chemisch reaktiver Schmelzkleber zum Verbinden einer Entdröhnung, insbesondere einer Entdröhnbahn, vorzugsweise einer Entdröhnfolie, insbesondere auf Bitumenbasis oder aus Bitumen, und einer aus einem thermoplastischen Kunststoff, vorzugsweise Polyolefin, insbesondere Polypropylen, bestehenden Oberfläche eines Körpers, vorzugsweise aus einem thermoplastischen Kunststoff, insbesondere Polyolefin, vorzugsweise Polypropylen, der 25 bis 35 Gew.% mindestens eines im Wesentlichen amorphen Poly-α-Olefins, 25 bis 35 Gew.% mindestens eines Harzes und 25 bis 35 Gew.% mindestens eines Füllstoffs enthält, und der einen Schmelzpunkt Tₘ aufweist, wobei Tₘ ≤ 80 °C, insbesondere wobei 60 °C ≤ Tₘ ≤ 80 °C, vorzugsweise wobei 60°C < Tₘ < 80°C. Weiterhin offenbart die Druckschrift DE 10 2007 062 514 A1 ein entsprechendes Verfahren zum Verbinden einer Entdröhnung, insbesondere einer Entdröhnbahn, vorzugsweise einer Entdröhnfolie, und/oder eines schalldämmenden Materials, insbesondere auf Bitumenbasis oder aus Bitumen, und einer aus einem thermoplastischen Kunststoff, insbesondere Polyolefin, vorzugsweise Polypropylen, bestehenden Oberfläche eines Körpers, beispielsweise eines Formteils, eines Bauteils oder einer Folie, vorzugsweise aus einem thermoplastischen Kunststoff, insbesondere aus Polyolefin, vorzugsweise aus Polypropylen,

Die Druckschrift GB 1,065,591 A offenbart ein schalldämmendes Material in Blattform, welches auf einer Metallplatte ausgelegt werden kann, welches sich an die Oberfläche der Metallplatte anpasst und welches unter Einfluss von Wärme sich fest an die Metallplatte bindet, wobei das schalldämmende Material aus einer Mischung aus Stoffen, umfassend Bitumen und Füllstoff, besteht und auf einer Seite ein regelmäßiges Klebstoffmuster aufweist.

Die Druckschrift DE 10 2007 033 214 A1 offenbart ein Verfahren zum Verkleben von mindestens zwei Werkstücken, bei welchem zunächst ein Klebstoff auf mindestens eines der Werkstücke aufgetragen wird, in einem zweiten Schritt der Klebstoff aktiviert wird und in einem dritten Schritt das mindestens eine Werkstück, auf welches der Klebstoff aufgetragen ist, mit mindestens einem weiteren Werkstück zusammengefügt wird. Der Klebstoff ist durch UV-Strahlung oder Vis-Strahlung aktivierbar und durch die Aktivierung werden Katalysatoren in dem Klebstoff gebildet, welche die Aushärtung des Klebstoffs ohne weitere Bestrahlung einleiten, oder in dem Klebstoff werden enthaltene Katalysatoren in einen angeregten Zustand überführt, welcher die Aushärtung auch ohne weitere Bestrahlung vollständig einleitet. Weiterhin offenbart die Druckschrift DE 10 2007 033 214 A1 einen Elektromotor, umfassend mindestens ein als Stator wirkendes Polgehäuse, mindestens einen Rotor sowie mindestens einen Permanentmagneten, wobei der mindestens eine Permanentmagnet durch das offenbarte Verfahren mit dem Rotor oder mit dem Stator verbunden ist.

Die Druckschrift EP 0 346 673 A1 offenbart einen Zweikomponenten-Reaktionskleber aus einer Komponente A und einer Komponente B, wobei die beiden Komponenten kurz vor Gebrauch vermischt werden, wobei die Komponente A mindestens eine bei Raumtemperatur flüssige Fettsäure und mindestens ein Erdalkalioxid oder Aluminiumoxid oder ein Gemisch dieser Verbindungen oder Wasser und/oder Kautschuklatex enthält und wobei die Komponente B mindestens ein Erdalkalioxid oder Aluminiumoxid oder ein Gemisch dieser Verbindungen oder Wasser und/oder Kautschuklatex enthält. Es muss entweder in der Komponente A oder in der Komponente B mindestens ein Erdalkalioxid oder Aluminiumoxid oder ein Gemisch dieser Verbindungen und in der anderen Komponente Wasser und/oder Kautschuklatex enthalten sein. Weiterhin sind die Komponente A oder die Komponente B oder beide Komponenten mit Bitumen, mit Hartwachs, mit einem bitumenverträglichen Polymeren oder mit einem Gemisch dieser Verbindungen verschnitten. Weiterhin offenbart die Druckschrift EP 0 346 673 A1 ein Verfahren zum Verkleben von Bitumenbahnen unter Herstellung einer wasserundurchlässigen Fläche aus Bitumenbahnen, wobei man die Komponenten A und B des Zweikomponentenklebers entsprechend vermischt, das Gemisch auf die Bitumenbahnen in an sich bekannter Weise aufbringt und die Bitumenbahnen miteinander verklebt.

Die Aufgabe der vorliegenden Erfindung ist es, ein Verfahren zur Herstellung einer Geschirrspülmaschine, insbesondere einer Haushaltsgeschirrspülmaschine, bereitzustellen, bei welcher die Befestigung von ein oder mehreren, insbesondere vorkonfektionierten, Bitumenmatten an einem Kunststoffbauteil aus Polypropylen verbessert ermöglicht wird.

Die Aufgabe wird bei einem Verfahren zur Herstellung einer Geschirrspülmaschine der eingangs genannten Art dadurch gelöst, dass ein gebrauchsfähiges, fließfähiges und reaktiv aushärtungsfähiges bituminöses Gemisch derart auf das Kunststoffbauteil aus Polypropylen und/oder auf die Bitumenmatte aufgebracht wird, dass wenigstens eine Klebewulst entsteht, die zumindest teilweise von wenigstens einem von dem reaktiv aushärtungsfähigen bituminösen Gemisch unbeaufschlagten Bereich umrandet ist, und indem vor dem Aushärten des reaktiv aushärtungsfähigen bituminösen Gemischs das Kunststoffbauteil aus Polypropylen und die Bitumenmatte zusammengedrückt werden.

Unter einer Bitumenmatte wird insbesondere eine solche Matte verstanden, welche unter Verwendung eines Bindemittels aus Bitumen, auch Erdpech genannt, beispielsweise Erdöldestillationsbitumen, und/oder aus bitumenartigen Bindemitteln, wie beispielsweise Naturasphalte, Polymerbitumen, Teere und Peche, hergestellt ist.

Wenn im Folgenden auf eine vorkonvektionierte Bitumenmatte Bezug genommen wird, so bedeutet der Begriff "vorkonfektioniert" dabei insbesondere, dass die Bitumenmatte zunächst unabhängig von dem Kunststoffbauteil aus Polypropylen, für welches sie vorgesehen ist, als Halbzeug oder Vorprodukt mit definierten Abmessungen gefertigt wird, um sie dann an dem Kunststoffbauteil aus Polypropylen befestigen zu können. Eine vorkonfektionierte Bitumenmatte kann beispielsweise hergestellt werden, indem ein Stück der gewünschten Größe, Geometrieform und/oder Dicke aus einer Basismatte ausgeschnitten oder ausgestanzt wird.

Der Begriff "Entdröhnen" bezieht sich insbesondere auf die Verringerung oder Vermeidung von Geräuschen, welche durch eine Anregung des Bauteils, insbesondere eines Kunststoffbauteils aus Polypropylen, oder von Teilen davon zu Schwingungen entstehen. Störende Geräusche können insbesondere an dünnwandigen Bauteilen wie zum Beispiel Spülbehälterwandungen, vorzugsweise der Bodenwanne und/oder der Tür, einer Geschirrspülmaschine entstehen, welche mit Spülflüssigkeit, insbesondere Sprühstrahlen aus Sprühdüsen eines rotierenden Sprüharms, beaufschlagt und dadurch zu Schwingungen angeregt werden. Es ist aber auch möglich, dass derartige Schwingungen durch Aktoren, wie beispielsweise Pumpen, Gebläse oder Ähnliches, erzeugt werden. Die Entdröhnung wird nun insbesondere dadurch erreicht, dass mittels der Bitumenmatte eine zusätzliche Masse auf das typischerweise dünnwandige Bauteil, insbesondere das Kunststoffbauteil aus Polypropylen, aufgebracht wird, so dass die Frequenzen der auftretenden Schwingungen kleiner werden, so dass die entstehenden Geräusche weniger störend sind. Zudem kann durch innere Reibung in der Bitumenmatte zumindest ein Teil der Schwingungsenergie in Wärme umgewandelt werden, so dass die Intensität der erzeugten Geräusche abnimmt.

Weiterhin kann die jeweilige Bitumenmatte zusätzlich oder unabhängig von einer Entdröhnung insbesondere auch für eine "Schallbedämmung" beziehungsweise Schalldämmung, das heißt Schallreflexion des jeweiligen Kunststoffbauteils aus Polypropylen sorgen. Insbesondere kann zum Beispiel Schall aus dem Inneren der Spülkammer des Spülbehälters der Geschirrspülmaschine von dem jeweiligen, mit ein oder mehreren Bitumenmatten beklebten Wandungsteil des Spülbehälters in dessen Spülkammerinneres zurückgeworfen werden. In analoger Weise kann natürlich auch die Entdröhnung und/oder Schallbedämmung für sonstige Kunststoffbauteile aus Polypropylen wie zum Beispiel für einen unterhalb des Spülbehälters angeordneten Basisträger, an und/oder in dem eine Umwälzpumpe und/oder Laugenpumpe angeordnet ist, durchgeführt werden. Insbesondere kann es zweckmäßig sein, wenn die Bodenwanne des Spülbehälters, die vorzugsweise durch die Deckenwandung des Basisträgers gebildet sein kann, unterseitig mit mindestens einer Bitumenmatte durch ein reaktiv aushärtungsfähiges, bituminöses Gemisch beklebt ist. Auch die Tür der Geschirrspülmaschine kann auf ihrer Innenwandung beziehungsweise Innentür außenseitig und/oder ihre Außenwandung beziehungsweise Außentür innenseitig mit jeweils mindestens einer Bitumenmatte durch reaktiv aushärtungsfähiges Bitumen beklebt sein. Zusätzlich oder unabhängig hiervon kann die jeweilige Bitumenmatte gegebenenfalls auch für eine gewisse Schalldämpfung sorgen.

Erfindungsgemäß wird die Bitumenmatte auf das Kunststoffbauteil aus Polypropylen aufgeklebt, indem gebrauchsfähiges, fließfähiges und reaktiv aushärtungsfähiges bituminöses Gemisch derart auf das Kunststoffbauteil aus Polypropylen und/oder auf die Bitumenmatte aufgebracht wird, dass wenigstens eine, vorzugsweise langgestreckte, insbesondere linien- oder strangförmige, Klebewulst entsteht, die zumindest teilweise von wenigstens einem unbeaufschlagten, das heißt von reaktiver Bitumenmasse frei bleibendem, Bereich umrandet ist, und indem vor dem Aushärten des bituminösen Gemischs das Kunststoffbauteil aus Polypropylen und die Bitumenmatte zusammengedrückt werden.

Zweckmäßigerweise wird die wenigstens eine Klebewulst aus reaktiv aushärtungsfähigem bituminösen Gemisch derart ausgebildet und auf die Bitumenmatte und/oder das jeweilig zu entdröhnende und/oder schallzubedämmende Kunststoffbauteil aus Polypropylen aufgebracht, dass auch der ursprünglich von dem bituminösen Gemisch unbeaufschlagte beziehungsweise unbelegte, das heißt frei bleibende Bereich nach dem Zusammendrücken des Kunststoffbauteils aus Polypropylen und der Bitumenmatte so bedeckt wird, dass eine im Wesentlichen vollflächige Klebeschicht jeweils auf den einander zugewandten Kontaktflächen des Kunststoffbauteils aus Polypropylen und der Bitumenmatte entsteht. Dadurch ist eine einwandfreie Adhäsion, das heißt stoffschlüssige Verbindung der jeweiligen Bitumenmatte an dem jeweilig zu entdröhnenden und/oder schallzudämmenden Kunststoffbauteil aus Polypropylen über die zwischen dem Kunststoffbauteil aus Polypropylen und der Bitumenmatte reaktiv aushärtende bituminöse Masse bereitgestellt. Durch die sich durch das Zusammendrücken von Bitumenmatte und Kunststoffbauteil aus Polypropylen vollflächige Ausbildung einer Klebemittelschicht aus dem reaktiv aushärtenden bituminösen Gemischs kann weitgehend vermieden werden, dass etwaig angreifende Spalt- und/oder Abschälkräfte zu einem unerwünschten Ablösen der jeweilig aufgebrachten Bitumenmatte führen können.

Gegebenenfalls können an dem jeweilig zu entdröhnenden und/oder schallzubedämmenden Kunststoffbauteil aus Polypropylen auch mehrere, insbesondere nebeneinander liegende, Klebekontaktflächen mit jeweils einer erfindungsgemäß hergestellten Klebeschicht aus einem reaktiv ausgehärteten bituminösen Gemisch vorgesehen sein, welche jeweils eine, insbesondere vorkonfektionierte, Bitumenmatte an dem Kunststoffbauteil aus Polypropylen befestigt.

Reaktiv aushärtbare bituminöse Gemische umfassen dabei wenigstens ein Basisbindemittel aus Bitumen, auch Erdpech genannt, oder aus bitumenartigen Bindemitteln, welches bei einer vorgesehenen Verarbeitungstemperatur eine derart hohe Viskosität aufweist, dass es sich nahezu wie ein Festkörper verhält.

Bei dem Basisbindemittel kann es sich beispielsweise um Erdöldestillationsbitumen, Naturasphalte, Polymerbitumen, Teere und Peche handeln.

Um nun das bituminöse Gemisch beim Aufbringen auf die jeweilige Bitumenmatte und/oder das jeweilige Kunststoffbauteil aus Polypropylen zu mindestens einer Klebewulst und durch Zusammendrücken von Bitumenmatte und Kunststoffbauteil aus Polypropylen eine, insbesondere vollflächige, Klebeschicht formen zu können, enthält das bituminöse Gemisch wenigstens ein Fluxmittel, welches die Viskosität des Gemischs soweit absenkt, dass es bei der vorgesehenen Verarbeitungstemperatur im noch unausgehärteten Zustand fließfähig ist, sich also wie eine Flüssigkeit oder insbesondere zähflüssige Masse verhält. Insbesondere kann durch das Fluxmittel eine im unausgehärteten Zustand verformbare beziehungsweise viskose bituminöse Masse bereitgestellt werden. Sie weist vorzugsweise eine Viskosität zwischen 10² bis 10⁶ Pa s bei Raumtemperatur von 20 °C auf. Fluxmittel sind dabei vorzugsweise schwerflüchtige Lösungsmittel, insbesondere schwerflüchtige Öle auf Mineralölbasis, Teeröle, pflanzliche und tierische Fette und Öle, Karbonsäuren, und schwerflüchtige technische Weichmacher aus synthetischen Polymeren, welche auch nach dem Aushärten des bituminösen Gemischs in dem bituminösen Gemisch verbleiben, also nicht ausdunsten.

Um nun zu bewirken, dass das bituminöse Gemisch nach der Formung der jeweiligen Klebeschicht aushärtet, wird dem Gemisch vor der Formung der jeweiligen Klebeschicht wenigstens ein Reaktivzusatz zur Erzeugung einer die Viskosität des Gemischs erhöhenden physikalischen und/oder chemischen Wirkung zugegeben. Dabei kann die Wirkung des Reaktivzusatzes selbsttätig von dem Reaktivzusatz oder durch die zusätzliche Zugabe wenigstens eines Aktivators in Gang gesetzt werden.

Der Reaktivzusatz kann, gegebenenfalls in Zusammenwirkung mit dem Aktivator, insbesondere die Wirkung des Fluxmittels vorzugsweise irreversibel aufheben, beispielsweise durch Vernetzung, Fällung oder durch Bindung an das Basisbindemittel.

Der Reaktivzusatz kann beispielsweise Chelatkomplexbildner, Säureanhydride, Alkohole, Karbonsäuren, Fettamine, anorganische Salze, Zemente, Kalk, Gips, Dolomit, Aschen, Schlacken, Gläser, Kieselgele und/oder Alaune umfassen.

Der Aktivator kann dabei insbesondere Wasser, Glykole, Fettalkohole, Tenside, Säuren und Laugen, Metallsalze, Schwefel, Peroxide, Latex und/oder Kunstharze umfassen.

Auch Fluxmittel auf der Basis von pflanzlichen und/oder mineralischen Ölen und/oder Harzen können zweckmäßig sein. Verallgemeinert betrachtet können die Fluxmittel aus nachwachsenden, das heißt regenerativen Rohstoffen gewonnen werden. Zusätzlich oder unabhängig hiervon können auch das Basisbindemittel, der Reaktivzusatz und/oder der Aktivator aus mindestens einem nachwachsenden Rohstoff hergestellt sein.

Ein gebrauchsfähiges, fließfähiges und reaktiv aushärtungsfähiges bituminöses Gemisch umfasst sämtliche notwendigen Bestandteile, um in fließfähiger, bevorzugt in zähflüssiger Form, das heißt verallgemeinert ausgedrückt in einem noch verformbaren Zustand auf das Kunststoffbauteil aus Polypropylen und/oder auf die Bitumenmatte aufgebracht werden zu können, und um aushärten zu können. Insbesondere wenn das bituminöse Gemisch ausreichend flüssig ist, kann es in vorteilhafter Weise durch Aufsprühen auf die jeweilige Klebekontaktfläche des Kunststoffbauteils aus Polypropylen und/oder der Bitumenmatte aufgetragen werden. Im Vergleich zu Lösungen, bei denen das fließfähige bituminöse Gemisch mechanisch, beispielsweise mittels eines Pinsels oder einer Spachtel, aufgebracht wird, kann die Klebeschicht durch Aufsprühen oder Strangpressen schneller und gleichmäßiger hergestellt werden. Denn dadurch, dass nur auf ausgewählten Abschnitten oder Bahnen der jeweiligen Kontaktfläche der Bitumenmatte und/oder des Kunststoffbauteils aus Polypropylen mindestens eine Klebewulst aufgebracht wird und die restlichen Abschnitte oder Zonen der jeweiligen Kontaktfläche beim Auftragsvorgang zunächst von bituminösem Material frei, das heißt unbelegt bleiben, kann Zeit beim Auftragsvorgang und Bitumenmaterial eingespart werden. Eine vollflächige Verteilung des derart in Form von ein oder mehreren Klebewülsten aufgebrachten bituminösen Materials kann dabei durch einfaches Zusammendrücken von Bitumenmatte und Kunststoffbauteil aus Polypropylen sichergestellt werden. Es entsteht somit eine im Wesentlichen geschlossene Klebeschicht auf der jeweilig vorgesehenen Klebkontaktfläche der Bitumenmatte und/oder des mit dieser zu belegenden Kunststoffbauteils aus Polypropylen.

Aufgrund der Größe und/oder Gewicht der üblichen Bitumenmatten kann es insbesondere zweckmäßig sein, die zum Aufbringen, insbesondere Aufsprühen oder Strangpressen, des bituminösen Gemischs verwendeten Mittel, welche beispielsweise eine Sprühdüse oder Strangpressdüse umfassen können, und das Kunststoffbauteil aus Polypropylen und/oder die Bitumenmatte während des Aufbringens des reaktiv aushärtungsfähigen Bitumengemischs relativ zueinander zu bewegen, um so nach und nach die Fläche des Kunststoffbauteils aus Polypropylen und/oder der Bitumenmatte mit bituminösem Gemisch zu versehen.

Indem nun das Aufbringen des Klebematerials in einem ersten Arbeitsschritt derart erfolgt, dass zunächst wenigstens eine, vorzugsweise langgestreckte, insbesondere linien-, schnur- oder strangförmige Klebewulst, auch Kleberaupe genannt, entsteht, die zumindest teilweise von wenigstens einem unbeaufschlagten, das heißt Reaktivbitumen-freien Bereich umrandet ist, kann das Auftragen des bituminösen Gemischs im Vergleich zu solchen Lösungen beschleunigt werden, bei denen das Kunststoffbauteil aus Polypropylen und/oder die Bitumenmatte jeweils von vornherein als einziger Arbeitsschritt vollflächig beaufschlagt wird, da bei dem erfindungsgemäßen Auftragungsverfahren mit zwei Arbeitsschritten bei identischer Breite der jeweilig aufgebrachten, vorzugsweise langgestreckten, insbesondere linien- oder strangförmigen, Klebwulst oder Klebewülste aus reaktiv aushärtungsfähigem, bituminösem Material die Gesamtstrecke der erforderlichen Relativbewegung verringert werden kann.

Indem weiterhin als zweiter Arbeitsschritt vorgesehen ist, dass vor dem Aushärten des nach dem erfindungsgemäßen Auftragsprinzip (erster Arbeitsschritt) aufgebrachten, reaktiv aushärtungsfähigen, bituminösen Gemischs das Kunststoffbauteil aus Polypropylen und die Bitumenmatte derart zusammengedrückt werden, dass sich das bituminöse Gemisch in den bei dem Auftragsvorgang frei geblieben, das heißt von Reaktivbitumen-Material unbeaufschlagten Lückenbereich zwischen je zwei benachbarten Abschnitten des jeweiligen Klebewulsts oder zweier benachbarte Klebewülste ausbreitet, so dass eine weitgehend vollflächige beziehungsweise geschlossene Klebeschicht auf der jeweiligen Klebekontaktfläche des Kunststoffbauteils aus Polypropylen und/oder der aufzuklebenden Bitumenmatte entsteht, kann nun eine besonders gute Entdröhnung und/oder Schallbedämmung erzielt werden. So stellt die derart hergestellte Klebeschicht insbesondere eine enge Schwingungskopplung zwischen dem Kunststoffbauteil aus Polypropylen und der Bitumenmatte sicher, so dass eine Schwingung des Kunststoffbauteils aus Polypropylen unabhängig von der Bitumenmatte weitgehend unterbunden ist.

Zweckmäßigerweise bedeckt also das bituminöse Gemisch den ursprünglich von bituminösen Gemisch unbeaufschlagten Bereich nach dem Zusammendrücken des Kunststoffbauteils aus Polypropylen und der Bitumenmatte so, dass eine im Wesentlichen vollflächige beziehungsweise geschlossene, insbesondere gleichmäßige beziehungsweise homogene Klebeschicht auf den einander zugewandten Kontaktflächen des Kunststoffbauteils aus Polypropylen und der Bitumenmatte entsteht.

Die Mittel zum Aufbringen des gebrauchsfähigen, fließfähigen und aushärtungsfähigen, bituminösen Gemischs in Form einer Klebewulst können beispielsweise eine Strangpresse oder eine Sprüheinrichtung umfassen. Durch zum Beispiel Strangpressen oder Aufsprühen des bituminösen Gemischs kann das bituminöse Gemisch einfach aufgetragen werden. Dabei kann mit einer Sprüheinrichtung oder Strangpresseinrichtung das bituminöse Gemisch in aller Regel schneller als bei einem vollflächigen Auftrag mittels eines mechanischen Auftragsmittels wie zum Beispiel mittels einer Abziehspachtel oder mittels eines Pinsels aufgetragen werden, weil nur voneinander querbeabstandete, das heißt auf Lücke gesetzte Klebewülste aus dem reaktiv aushärtungsfähigen bituminösen Material auf die Kontaktfläche der jeweiligen Bitumenmatte und/oder die zugeordnete Kontaktfläche des jeweilig zu entdröhnenden und/oder schallzubedämmenden Kunststoffbauteils aus Polypropylen aufgebracht werden. Gleichwohl kann durch Zusammenpressen der jeweiligen Bitumenmatte und des jeweiligen Kunststoffbauteils aus Polypropylen eine weitgehend geschlossene, insbesondere gleichmäßige beziehungsweise homogene, bevorzugt weitgehend konstant dicke Klebeschicht hergestellt werden.

Die so hergestellte Klebeschicht aus dem reaktiv ausgehärteten bituminösen Gemisch weist im Vergleich zu bekannten Klebern zum Befestigen von Bitumenmatten an Kunststoffbauteilen aus Polypropylen an Geschirrspülmaschinen überlegene Hafteigenschaften sowohl an der Bitumenmatte als auch an den üblichen Oberflächenmaterialien der Kunststoffbauteile aus Polypropylen von Geschirrspülmaschinen auf. Insbesondere haftet die Klebeschicht hervorragend auf Kunststoffteilen, insbesondere auf Teilen, die aus Polypropylen hergestellt sind. Aber auch auf Teilen aus blankem Metall, insbesondere aus blankem, rostfreiem Edelstahl, ist eine ausreichende und zuverlässige Anhaftung beziehungsweise stoffschlüssige, das heißt materialinnige Verbindung der Klebemittelschicht aus dem reaktiven bituminösen Gemisch an der jeweiligen Bitumenmatte und/oder dem jeweilig mit dieser zu beklebenden Kunststoffbauteil aus Polypropylen sichergestellt. Insbesondere kann die Haftung auf einem Metallteil gegebenenfalls durch dessen Vorbehandlung wie zum Beispiel mit einer Grundierung, Lackschicht oder Kunststoffbeschichtung erhöht werden.

Aufgrund der guten Hafteigenschaften der Klebeschicht aus dem reaktiv ausgehärteten bituminösen Gemisch kann aber in den allermeisten Fällen auf eine Vorbehandlung der Oberfläche des Kunststoffbauteils aus Polypropylen, beispielsweise Aufrauen, Plasmatieren, Beflammen und dergleichen, verzichtet werden, was die Herstellung der Geschirrspülmaschine vereinfacht. Auch eine Grundierung, Lackierung, Kunststoffbeschichtung oder sonstige Überzugs-Vorbehandlung des mit der Bitumenmatte zu belegenden Kunststoffbauteils aus Polypropylen ist oftmals nicht erforderlich, um eine ausreichend zuverlässige Anhaftung der Klebeschicht an dem Kunststoffbauteil aus Polypropylen zu erreichen.

Im Vergleich zu bekannten Heißklebern, welche typischerweise eine Verarbeitungstemperatur von beispielsweise 130 bis 200 °C erfordern, kann die Klebeschicht aus dem reaktiv ausgehärteten bituminösen Gemisch bei geeigneter Auswahl der Komponenten ohne Zuführung von Wärme bei Raumtemperatur hergestellt werden. Hierdurch kann bei der Herstellung der Geschirrspülmaschine eine signifikante Energieeinsparung erzielt werden. Gleichwohl kann es sinnvoll sein, bei der Herstellung der Klebeschicht eine Zuführung von Wärme vorzusehen, um das Aushärten zu beschleunigen. Dafür sind jedoch im Allgemeinen deutlich geringere Temperaturen, beispielsweise 60 bis 70 °C, ausreichend.

Zudem kann durch die Verwendung von reaktiv aushärtungsfähigen, bituminösem Gemisch für das Auftragen von ein oder mehreren Klebewülsten und damit letztlich für die durch Zusammendrücken von jeweiliger Bitumenmatte und Kunststoffbauteil aus Polypropylen bewirkte, insbesondere vollflächige, bevorzugt weitgehend plane, Klebeschicht beim Befestigen der Bitumenmatte an dem Kunststoffbauteil aus Polypropylen die thermische Belastung des zu entdröhnenden und/oder schallzubedämmenden Kunststoffbauteils aus Polypropylen, der jeweiligen, insbesondere vorkonfektionierten, Bitumenmatte und/oder weiterer benachbarter Bestandteile der Geschirrspülmaschine gering gehalten werden. Hierdurch können in vielen Fällen weniger temperaturstabile Bestandteile für die Geschirrspülmaschine als bisher genutzt werden, was die Herstellkosten der Geschirrspülmaschine verringern kann.

Gegenüber der Verwendung von bekannten Kaltklebern, welche typischerweise ein flüchtiges und beim Aushärten ausdunstendes Lösungsmittel enthalten, kann die Verwendung von reaktiv aushärtungsfähigen bituminösen Gemisch als Klebematerial für die gewünschte Klebeschicht umweltfreundlicher sein.

Die fertige Klebeschicht aus dem reaktiv ausgehärteten bituminösen Gemisch ist zudem äußerst langlebig und kann so die Gebrauchsdauer einer Geschirrspülmaschine in den allermeisten Fällen überdauern.

Die Bildung einer Entdröhnanordnung und/oder Schallbedämmungsanordnung, welche das jeweilig zu entdröhnende und/oder schallzudämmende Kunststoffbauteil aus Polypropylen, die erfindungsgemäß hergestellte Klebeschicht und die vorgefertigte Bitumenmatte umfasst, weist gegenüber solchen Lösungen, bei denen ausschließlich fließfähiges Bitumen auf das Kunststoffbauteil aus Polypropylen aufgebracht wird, den Vorteil einer kürzeren Aushärtezeit und gegebenenfalls auch geringeren Materialverbrauch auf. Damit kann die Herstellzeit für die Geschirrspülmaschine insgesamt verkürzt werden.

Dabei kann die Entdröhnanordnung und/oder Schallbedämmungsanordnung, welche das jeweilig zu entdröhnende und/oder schallzudämmende Kunststoffbauteil aus Polypropylen, die erfindungsgemäß hergestellte Klebeschicht und die vorgefertigte Bitumenmatte umfasst, über nahezu homogene mechanische und akustische Eigenschaften verfügen. So können die Klebeschicht und die Bitumenmatte beispielsweise eine vergleichbare Dichte, ein vergleichbares Elastizitätsmodul und/oder einen vergleichbaren Schalldämmungs- und/oderabsorptionsgrad aufweisen, so dass die Klebeschicht selbst einen wirkungsvollen Beitrag zur Entdröhnung und/oder Schallbedämmung und/oder Schallabsorption des Kunststoffbauteils aus Polypropylen leisten kann. Durch vergleichbare mechanische Eigenschaften kann zudem ein Ablösen oder Abschälen der jeweiligen Bitumenmatte von der erfindungsgemäß hergestellten Klebeschicht, insbesondere durch Schwingungen oder Temperaturschwankungen, auch langfristig verhindert werden. Hierdurch werden eine besonders gute Haltbarkeit der Verbindung sowie eine besonders gute Geräuschminderung erreicht.

Gemäß einer zweckmäßigen Weiterbildung der Erfindung wird das Zusammendrücken von der jeweiligen Bitumenmatte und von dem jeweilig zu entdröhnenden und/oder schallzubedämmenden Kunststoffbauteil aus Polypropylen in einem zweiten Arbeitsschritt des Klebevorgangs derart durchgeführt, dass das bituminöse Gemisch, das vor dem Zusammendrücken in einem ersten Arbeitsschritt des Klebevorgangs als langgestreckte Klebewulst oder Klebewülste aufgebracht worden ist, auch den von dem bituminösen Gemisch unbeaufschlagten Bereich des Kunststoffbauteils aus Polypropylen und/oder der Bitumenmatte bedeckt, so dass eine im Wesentlichem vollflächige, bevorzugt weitgehend plane, Klebeschicht zwischen den einander zugewandten Kontaktflächen von Bitumenmatte und Kunststoffbauteil aus Polypropylen entsteht. Indem vorgesehen ist, dass vor dem Aushärten des bituminösen Gemischs das Kunststoffbauteil aus Polypropylen und die Bitumenmatte derart zusammengedrückt werden, dass sich das bituminöse Gemisch der jeweiligen Klebewulst in den jeweiligen von dem bituminösen Gemisch unbeaufschlagten Freibereich ausbreitet, so dass insgesamt eine vollflächige beziehungsweise geschlossene Klebeschicht entsteht, kann nun eine besonders gute Entdröhnung und/oder Schallbedämmung und/oder Schalladsorption erzielt werden. So stellt die derart hergestellte Klebeschicht insbesondere eine enge Schwingungskopplung zwischen dem Kunststoffbauteil aus Polypropylen und der Bitumenmatte sicher, so dass eine Schwingung des Kunststoffbauteils aus Polypropylen unabhängig von der Bitumenmatte weitgehend unterbunden ist.

Nach einer zweckmäßigen Weiterbildung der Erfindung ist vorgesehen, dass das bituminöse Gemisch entweder ausschließlich auf das Kunststoffbauteil aus Polypropylen oder ausschließlich auf die Bitumenmatte in Form von ein oder mehreren Klebewülsten aufgebracht wird. Hierdurch wird das erfindungsgemäße Verfahren ohne funktionelle Nachteile besonders einfach durchführbar. Besonders bevorzugt wird dabei das Kunststoffbauteil aus Polypropylen mit dem bituminösen Gemisch in Form mindestens einer Klebewulst beaufschlagt, insbesondere belegt, oder gegebenenfalls besprüht, da das Kunststoffbauteil aus Polypropylen in der Regel formstabiler als die Bitumenmatte ist und damit mit der noch im unausgehärteten Zustand belegten bituminösen Masse leichter beziehungsweise einfacher als eine Bitumenmatte handhabbar ist.

Nach einer vorteilhaften Weiterbildung der Erfindung ist vorgesehen, dass wenigstens eine Klebewulst in Form einer zusammenhängenden, das heißt lückenlosen beziehungsweise ununterbrochenen Raupenbahn, insbesondere mäanderförmig, auf das Kunststoffbauteil aus Polypropylen und/oder die Bitumenmatte vor dem Zusammendrücken des Kunststoffbauteils aus Polypropylen und der Bitumenmatte aufgebracht wird. Mittels einer derartig ausgebildeten, insbesondere mäanderförmigen, Klebewulst kann eine große Fläche des Kunststoffbauteils aus Polypropylen beziehungsweise der Bitumenmatte mit einem weitgehend durchgehenden, vorzugsweise gleichmäßigen, insbesondere gleich dicken, Strang aus dem reaktiv aushärtungsfähigen, bituminösen Gemisch und ohne Unterbrechung des Auftragsvorgangs versehen werden. Eine einzige solche Verlegebahn kann zur ausreichenden Flächenbelegung mit bituminösen Gemisch genügen. Hierdurch kann der Auftrag an bituminösem Gemisch besonders schnell und einfach ausgeführt werden. Dies gilt insbesondere im Vergleich zu solchen Lösungen, bei denen lediglich einzelne beziehungsweise separate, insbesondere parallele, Klebewülste verwendet werden. Auch letzteres kann allerdings noch gegenüber einer vollflächigen Auftragsweise verbessert sein. So kann es gegebenenfalls ausreichend sein, wenn mehrere Klebewülste in Form von mehreren voneinander separaten Raupenbahnen auf das Kunststoffbauteil aus Polypropylen und/oder auf die jeweilige Bitumenmatte vor dem Zusammendrücken des Kunststoffbauteils aus Polypropylen und der Bitumenmatte aufgebracht werden.

Zusammenfassend betrachtet wird also die jeweilige Klebewulst vorzugsweise im Wesentlichen linien-, schnur- oder strangförmig auf das jeweilige Kunststoffbauteil aus Polypropylen und/oder auf die diesem jeweilig zugeordnete Bitumenmatte vor deren Zusammendrücken aneinander aufgebracht, insbesondere aufgetragen. Dabei kann es insbesondere hinsichtlich der Handhabung und Klebequalität vorteilhaft sein, wenn wenigstens eine Klebewulst in Form einer einzelnen, zusammenhängenden Raupenbahn, insbesondere mäanderförmig, auf das Kunststoffbauteil aus Polypropylen und/oder die Bitumenmatte vor dem Zusammendrücken des Kunststoffbauteils aus Polypropylen und der Bitumenmatte aufgebracht wird.

Gegebenenfalls kann es auch ausreichend sein, wenn mehrere Klebewülste in Form von mehreren separaten Raupenbahnen auf das Kunststoffbauteil aus Polypropylen und/oder auf die jeweilige Bitumenmatte vor dem Zusammendrücken des Kunststoffbauteils aus Polypropylen und der Bitumenmatte aufgebracht werden.

Gemäß einer zweckmäßigen Weiterbildung der Erfindung kann es insbesondere vorteilhaft sein, wenn vor dem Zusammendrücken des Kunststoffbauteils aus Polypropylen und der Bitumenmatte wenigstens eine Klebewulst auf einem Randbereich der jeweiligen Klebekontaktfläche des Kunststoffbauteils aus Polypropylen und/oder der Bitumenmatte derart aufgebracht wird, dass sie den Randbereich der jeweiligen Klebekontaktfläche als teilweise oder ganz geschlossene Masche oder Ringwulst umläuft. Eine derart geformte Masche oder Ringwulst kann je nach Form beziehungsweise Kontur des Randbereichs beispielsweise eckig oder rund ausgestaltet sein. Ein solcher Randbereich kann beispielsweise durch eine äußere Randzone auf der Klebekontaktfläche entlang der Außenkante, das heißt äußeren Begrenzungskante der Bitumenmatte und/oder des jeweilig zu entdröhnenden und/oder schallzubedämmenden Kunststoffbauteils aus Polypropylen gebildet sein. Er kann auch durch eine innere Randzone auf der Klebekontaktfläche ringsum einen Durchbruch gebildet sein, der innerhalb der Klebekontaktfläche der Bitumenmatte oder des jeweilig zu entdröhnenden und/oder schallzubedämmenden Kunststoffbauteils aus Polypropylen liegt. Diese teilweise oder ganz geschlossenen Klebewulst- Umrahmungen von ein oder mehreren äußeren und/oder inneren Randzonen der Klebekontaktfläche der jeweilig aufzubringenden Bitumenmatte oder der jeweiligen Klebekontaktfläche des jeweilig zu entdröhnenden und/oder schallzubedämmenden Kunststoffbauteils aus Polypropylen begrenzen die jeweilige Klebekontaktfläche außen oder innen. Auf diese Weise kann insbesondere an dem jeweiligen Randzonenbereich der Bitumenmatte eine besonders dauerhafte und stabile Klebeverbindung erzielt werden, so dass die Gefahr eines Ablösens oder Abschälens der Bitumenmatte von dem zugeordneten Kunststoffbauteil aus Polypropylen im späteren Betrieb der Geschirrspülmaschine verringert ist.

Beispielsweise kann eine maschenartige Klebewulst vorgesehen sein, die ringsum einen äußeren Randbereich auf der Klebekontaktfläche der Bitumenmatte verläuft, der von der äußeren Umfangskontur der Bitumenmatte begrenzt ist. Zusätzlich oder unabhängig hiervon kann auch eine maschenartige Klebewulst vorgesehen sein, die ringsum einen äußeren Randbereich auf der Klebekontaktfläche des jeweilig zu entdröhnenden und/oder schallzubedämmenden Kunststoffbauteils aus Polypropylen verläuft, der von der äußeren Umfangskontur des Kunststoffbauteils aus Polypropylen begrenzt ist. Auf diese Weise wird eine besonders dauerhafte und stabile Klebeverbindung erzielt, so dass die Gefahr eines Ablösens oder Abschälens der Bitumenmatte, insbesondere im späteren Betrieb der Geschirrspülmaschine, an dem äußeren Randbereich der Bitumenmatte verringert ist.

Alternativ oder zusätzlich kann ein maschenförmiger Klebewulst längs eines inneren Randbereichs der Klebekontaktfläche der Bitumenmatte verlaufen, der zum Beispiel eine Öffnung in der Bitumenmatte begrenzt. Auf diese Weise wird die Klebeverbindung weiter verbessert, da die Gefahr eines Ablösens oder Abschälens der Bitumenmatte an ihren inneren Randzonen im späteren Betrieb der Geschirrspülmaschine weitgehend vermieden ist. In analoger Weise kann zusätzlich oder unabhängig hiervon ein innerer Randbereich bei dem jeweilig zu entdröhnenden und/oder schallzubedämmenden Kunststoffbauteil aus Polypropylen durch mindestens eine Klebewulstmasche belegt werden.

Nach einer vorteilhaften Weiterbildung der Erfindung weist die Bitumenmatte wenigstens einen abgerundeten Eckbereich auf. Hierdurch kann die Dauerhaftigkeit der Klebeverbindung alternativ oder zusätzlich verbessert werden, da ein Abziehen oder Abschälen der Bitumenmatte durch Abrundungen deren Eckbereiche erschwert wird.

Gemäß einer zweckmäßigen Weiterbildung der Erfindung weist die abgerundete Ecke einen Radius von mindestens 2 mm, bevorzugt mindestens 4 mm, besonders bevorzugt wenigstens 6 mm, und/oder von höchstens 30 mm, bevorzugt höchstens 20 mm, besonders bevorzugt höchstens 15 mm, auf. Die angegebenen Mindestwerte für die Radien stellen eine gute Haltbarkeit der Klebeverbindung sicher, wobei durch die angegebenen Maximalradien sichergestellt ist, dass auch in Eckbereichen des Kunststoffbauteils aus Polypropylen eine Entdröhnung durch die Bitumenmatte möglich ist.

Gemäß einer weiteren zweckmäßigen Weiterbildung der Erfindung wird wenigstens eine Klebewulst derart ausgebildet und aufgebracht, dass sie beim Zusammendrücken des Kunststoffbauteils aus Polypropylen und der Bitumenmatte aus einer randkantenseitigen Klebefuge zwischen dem Kunststoffbauteil aus Polypropylen und der Bitumenmatte hervorquillt und einen Randkantenabschnitt der Bitumenmatte und/oder des Kunststoffbauteils aus Polypropylen teilweise oder ganz einfasst. Dadurch wird Abscherungs- und Abschälkräften verbessert entgegengewirkt und der Seitenhalt der Bitumenmatte wird verbessert.

Gemäß einer zweckmäßigen Weiterbildung der Erfindung ist vorgesehen, dass das Kunststoffbauteil aus Polypropylen und die Bitumenmatte derart zusammengedrückt werden, dass die Klebeschicht einen wulstförmigen Abschnitt erhält, der einen seitlichen Randkantenbereich der Bitumenmatte, der quer, insbesondere senkrecht, zu deren Kontaktfläche verläuft, wenigstens teilweise umschließt. Hierdurch erhält die Bitumenmatte eine zusätzliche auf ihre Seitenfläche wirkende Fixierung, so dass die Dauerhaftigkeit der Klebeverbindung verbessert wird.

Nach einer vorteilhaften Weiterbildung der Erfindung beträgt die mittlere Breite des Klebewulsts wenigstens 2 mm, bevorzugt wenigstens 4 mm, besonders bevorzugt wenigstens 6 mm, und/oder höchstens 30 mm, bevorzugt höchstens 20 mm, besonders bevorzugt höchstens 15 mm. Durch die angegebenen Mindestwerte kann die Gesamtlänge des Klebewulsts oder der Klebewülste gering gehalten werden, wobei durch die angegebenen Maximalwerte ein hinreichend gleichmäßiger Auftrag des bituminösen Gemischs pro gewünschter, vorgegebener Klebefläche erzielt wird, um beim späteren Zusammendrücken des Kunststoffbauteils aus Polypropylen und der Bitumenmatte eine vollflächige Klebeschicht erreichen zu können.

Gemäß einer zweckmäßigen Weiterbildung der Erfindung beträgt der mittlere Lückenabstand zweier nebeneinander verlaufender Abschnitte, insbesondere parallel verlaufender Abschnitte, einer Klebewulst oder mehrerer Klebewülste wenigstens das 1,0-fache der Breite des Klebewulsts oder der Klebewülste, bevorzugt wenigstens das 1,2-fache, besonders bevorzugt wenigstens das 1,5-fache, und/oder höchstens das 4,0-fache der Breite des Klebewulsts oder der Klebewülste, bevorzugt höchstens das 3,0-fache, besonders bevorzugt höchstens das 2,0-fache. Durch die angegebenen Mindestwerte kann die Gesamtlänge des Klebewulsts oder der Klebewülste weiter verringert werden, wobei durch die angegebenen Maximalwerte ein hinreichend gleichmäßiger Auftrag des bituminösen Gemischs pro Fläche erzielt wird, um beim späteren Zusammendrücken des Kunststoffbauteils aus Polypropylen und der Bitumenmatte eine vollflächige Klebeschicht erreichen zu können.

Nach einer vorteilhaften Weiterbildung der Erfindung beträgt die aufgesprühte Masse des bituminösen Gemischs bezogen auf die dem Kunststoffbauteil aus Polypropylen zugewandte Fläche der Bitumenmatte wenigstens 0,1 kg/m², bevorzugt wenigstens 0,2 kg/m², besonders bevorzugt wenigstens 0,3 kg/m², und/oder höchstens 2,0 kg/m², bevorzugt höchstens das 1,2 kg/m², besonders bevorzugt höchstens 0,8 kg/m². Durch die angegebenen Mindestwerte kann eine hinreichend stabile Klebeverbindung sichergestellt werden, wobei durch die angegebenen Maximalwerte verhindert wird, dass die Klebeschicht im späteren Betrieb der Geschirrspülmaschine bei Erwärmung verläuft.

Gemäß einer zweckmäßigen Weiterbildung der Erfindung beträgt die Zeit zwischen der Herstellung des gebrauchsfähigen, fließfähigen und aushärtungsfähigen bituminösen Gemischs und dem Zusammendrücken des Kunststoffbauteils aus Polypropylen und der Bitumenmatte höchstens 90 s, bevorzugt höchstens 75 s, besonders bevorzugt höchsten 60 s. Auf diese Weise ist es möglich, besonders schnell aushärtende bituminöse Gemische zu verwenden, was die Herstellzeit der Geschirrspülmaschine verringert. Zudem ist so einem Ablösen der Bitumenmatte während der Aushärtezeit des bituminösen Gemischs entgegengewirkt.

Gemäß einer zweckmäßigen Weiterbildung der Erfindung wird das gebrauchsfähige, fließfähige und aushärtungsfähige bituminöse Gemisch hergestellt, indem eine Mischung aus einer ersten Komponente und aus einer zweiten Komponente gebildet wird,
- wobei die erste Komponente ein Basisbindemittel, ein Fluxöl und einen Reaktivzusatz enthält, welche so aufeinander abgestimmt sind, dass zum Aushärten ein Aktivator erforderlich ist, und wobei die zweite Komponente den Aktivator enthält; oder
- wobei die erste Komponente ein Basisbindemittel und ein Fluxöl enthält, welche so aufeinander abgestimmt sind, dass zum Aushärten ein Reaktivzusatz erforderlich ist, und wobei die zweite Komponente den Reaktivzusatz enthält; oder
- wobei die erste Komponente ein Basisbindemittel und ein Fluxöl enthält, welche so aufeinander abgestimmt sind, dass zum Aushärten ein Reaktivzusatz und ein Aktivator erforderlich sind, und wobei die zweite Komponente den Reaktivzusatz und den Aktivator enthält.

Auf diese Weise wird das gebrauchsfähige, fließfähige und aushärtungsfähige bituminöse Gemisch jeweils durch Mischung zweier Komponenten hergestellt, welche getrennt voneinander längere Zeit lagerbar sind. Das gebrauchsfähige, fließfähige und aushärtungsfähige bituminöse Gemisch kann dabei unmittelbar vor dem Aufbringen auf das Kunststoffbauteil aus Polypropylen und/oder auf die Bitumenmatte durch einfaches Mischen der Komponenten hergestellt werden, wodurch das Aushärten einsetzt. Probleme durch zu frühes Aushärten können so vermieden werden.

Gemäß einer vorteilhaften Weiterbildung der Erfindung ist das Kunststoffbauteil aus Polypropylen ein Wandungsteil zum Begrenzen einer Spülkammer der Geschirrspülmaschine. Unter einer Spülkammer wird eine Kammer der Geschirrspülmaschine verstanden, welche zur Aufnahme von Spülgut, insbesondere von Geschirr, während eines Spülgangs, auch Spülprozess genannt, vorgesehen ist. Üblicherweise ist die Spülkammer in einem kastenförmigen Spülbehälter angeordnet, der aus mehreren Wandungsteilen zusammengesetzt sein kann. Beispielsweise kann der Spülbehälter ein erstes Wandungsteil umfassen, welches als U-förmige Spülbehälterhaube ausgebildet ist und eine erste Seitenwand, eine dieser gegenüberstehende zweite Seitenwand und eine Decke des Spülbehälters umfasst, so dass die Spülkammer nach zwei gegenüberliegenden Seiten und nach oben begrenzt ist. Ein zweites Wandungsteil des Spülbehälters kann als Rückwand ausgebildet sein und die Spülkammer nach einer dritten Seite begrenzen. Weiterhin kann der Spülbehälter ein drittes Wandungsteil umfassen, welches als Bodenwanne, auch Spülwanne genannt, ausgebildet ist und welches die Spülkammer nach unten begrenzt. Die verbleibende Seite des Spülbehälters kann durch eine bewegliche Tür verschließbar sein, welche ein als Innentür ausgebildetes viertes Wandungsteil aufweist, welches bei geschlossener Tür die Spülkammer zur vierten Seite begrenzt. Es sind aber auch andere Anordnungen von Wandungsteilen denkbar. Beispielsweise könnte die Tür an der Oberseite der Spülkammer vorgesehen sein, so dass die Spülkammer von oben her beladbar ist.

Die die Spülkammer begrenzenden Wandungsteile sind üblicherweise dünnwandig ausgeführt. So sind, je nach Material, Wandstärken beispielsweise im Bereich von 0,3 bis 2 mm üblich. Dabei werden die Wandungsteile während der Durchführung eines Spülgangs an ihrer Innenseite mit umgewälzter Spülflüssigkeit beaufschlagt, so dass sie besonders stark zu Schwingungen angeregt werden, welche unerwünschte Geräusche verursachen können. In dem nun auf eines oder mehrere der Wandungsteile wenigstens eine Bitumenmatte mittels einer Klebeschicht aus einem reaktiv ausgehärteten bituminösen Gemisch aufgeklebt ist, kann die Geräuschabgabe der Geschirrspülmaschine wesentlich verringert werden.

Nach einer vorteilhaften Weiterbildung der Erfindung wird die Klebeschicht durch wenigstens ein an dem Kunststoffbauteil aus Polypropylen abstehendes Begrenzungselement seitlich begrenzt. Auf diese Weise kann verhindert werden, dass das bituminöse Gemisch vor dem vollständigen Aushärten parallel zur Oberfläche des Kunststoffbauteils wegfließt. Zudem kann so die Kontaktfläche von dem Kunststoffbauteil aus Polypropylen mit der Klebeschicht vergrößert werden, so dass die Verbindung von Kunststoffbauteil aus Polypropylen und Klebeschicht belastbarer wird. Dabei kann vorgesehen sein, dass die Klebeschicht durch das wenigstens eine abstehende Begrenzungselement teilweise umrandet oder vollständig umrandet ist. Das Begrenzungselement kann insbesondere als Steg ausgebildet sein, dessen Höhe die Höhe der Klebeschicht überragen kann, wodurch die Bitumenmatte an ihrem Rand gegen äußere Einwirkungen, beispielsweise bei der Herstellung der Geschirrspülmaschine, geschützt sein kann.

Gemäß einer zweckmäßigen Weiterbildung der Erfindung wird die Bitumenmatte auf eine dreidimensional strukturierte Fläche des Kunststoffbauteils aus Polypropylen aufgeklebt. Hierdurch kann die Kontaktfläche von dem Kunststoffbauteil aus Polypropylen mit der Klebeschicht weiter vergrößert werden, so dass die Verbindung von Kunststoffbauteil aus Polypropylen und Klebeschicht noch belastbarer wird. Die strukturierte Fläche kann insbesondere eine Prägung, beispielsweise in Form von Waben, aufweisen.

Gemäß einer vorteilhaften Weiterbildung der Erfindung weist die strukturierte Fläche wenigstens einen Steg und/oder wenigstens eine Rille au, das heißt allgemein ausgedrückt Erhöhungen und/oder Vertiefungen auf. Diese bewirken eine dreidimensional strukturierte Oberfläche und können insbesondere an Kunststoffteilen, insbesondere Kunststoff-Spritzgussteilen in fertigungstechnisch einfacher Weise ausgebildet werden.

Die Klebeschicht aus dem reaktiv ausgehärteten bituminösen Gemisch ist für Kunststoffbauteile aus Polypropylen besonders gut geeignet, da das Aufkleben der Bitumenmatte bei "relativ kalten" Temperaturen erfolgen kann, welche geringer als bei der Verwendung eines Heißklebers sind, so dass Schäden an temperaturempfindlichen Kunststoffen vermieden werden können. Zudem weist ein entsprechend zusammengesetztes, reaktiv ausgehärtetes bituminöses Gemisch auf den meisten Kunststoffen, insbesondere auf Polypropylen, eine bessere Haftfähigkeit als bekannte Heiß- oder Kaltkleber auf.

Gemäß einer zweckmäßigen Weiterbildung der Erfindung kann das Kunststoffbauteil aus Polypropylen auch ein lackiertes Teil sein. Die Klebeschicht aus dem reaktiv ausgehärteten bituminösen Gemisch ist für derartige Teile besonders gut geeignet, da auch hier Temperaturschäden an dem Lack, der Kunststoffbeschichtung oder Grundierung verhindert werden können und eine gute Haftfähigkeit erreicht werden kann.

Nach einer zweckmäßigen Weiterbildung der Erfindung wird das Kunststoffbauteil aus Polypropylen durch eine Schichtanordnung entdröhnt oder schallbedämmt, welche ausschließlich durch die Bitumenmatte und die Klebeschicht gebildet ist. Hierdurch kann eine wirksame und dauerhafte Entdröhnung des Kunststoffbauteils aus Polypropylen auf einfache Weise bewirkt werden. Grundsätzlich wäre es aber möglich, mehrere Klebeschichten und Bitumenmatten stapelartig anzuordnen. Auch können gegebenenfalls mehrere Bitumenmatten nebeneinander mit und ohne Abstand zueinander an festgelegten Belegflächen auf dem jeweilig zu entdröhnenden und/oder schallzubedämmenden Kunststoffbauteil aus Polypropylen mittels der reaktiv aushärtungsfähigen bituminösen Masse aufgeklebt werden.

Gemäß einer vorteilhaften Weiterbildung der Erfindung weist die jeweilige Bitumenmatte eine maximale Dicke in einem Bereich von 0,8 bis 8 mm, bevorzugt in einem Bereich von 1,2 bis 6 mm, besonders bevorzugt in einem Bereich von 1,6 bis 4 mm, auf. In den genannten Bereichen kann bei geringem Materialeinsatz eine ausreichende Entdröhnung und/oder Schallbedämmung von Kunststoffbauteilen aus Polypropylen der Geschirrspülmaschine erzielt werden. Dabei kann die Bitumenmatte eine gleichbleibende Dicke oder eine variable Dicke aufweisen.

Nach einer vorteilhaften Weiterbildung der Erfindung weist die Klebeschicht eine maximale Dicke in einem Bereich von 0,1 bis 6 mm, bevorzugt in einem Bereich von 0,2 bis 3 mm, besonders bevorzugt in einem Bereich von 0,4 bis 1,5 mm, auf. In den genannten Bereichen ist die Klebeschicht hinreichend dick, um auch bei ungewollten Unebenheiten und/oder bei einer gewollten dreidimensionalen Strukturierung der Oberfläche des Kunststoffbauteils aus Polypropylen und/oder der Oberfläche der Bitumenmatte einen weitgehend vollflächigen Kontakt der Klebeschicht mit dem Kunststoffbauteil aus Polypropylen und/oder mit der Bitumenmatte zu erzielen. Hierdurch wird eine besonders stabile Anordnung mit besonders guter Entdröhnwirkung und/oder Schallbedämmungswirkung erreicht. Dabei wird gleichzeitig ein überhöhter Materialeinsatz vermieden.

Weiterhin betrifft die Erfindung eine Geschirrspülmaschine, insbesondere Haushaltsgeschirrspülmaschine, mit wenigstens einem Kunststoffbauteil aus Polypropylen, welches mit wenigstens einer, insbesondere vorkonfektionierten, Bitumenmatte zur Entdröhnung und/oder Schallbedämmung des Kunststoffbauteils aus Polypropylen versehen ist, welche dadurch gekennzeichnet ist, dass das Bauteil ein Kunststoffbauteil aus Polypropylen ist und dass die Geschirrspülmaschine, insbesondere Haushaltsgeschirrspülmaschine, durch ein Verfahren der oben beschriebenen Art hergestellt ist. Es ergeben sich die genannten Vorteile.

Bei der erfindungsgemäßen Geschirrspülmaschine ist vorgesehen, dass das Kunststoffbauteil aus Polypropylen und die Bitumenmatte mittels wenigstens einer Klebewulst aus einem im gebrauchsfertigen Zustand fließfähigen und reaktiv aushärtungsfähigen bituminösen Gemisch miteinander verklebt sind.

Die in den abhängigen Ansprüchen wiedergegebenen und/oder vorstehend erläuterten vorteilhaften Weiterbildungen der Erfindung können einzeln oder in beliebiger Kombination vorgesehen sein.

Die Erfindung und ihre Weiterbildungen sowie deren Vorteile werden nachfolgend anhand von Zeichnungen näher erläutert.

Es zeigen jeweils schematisch:
- Fig. 1: ein Ausführungsbeispiel eines Spülbehälters mit einer ihm zugeordneten Tür für eine erfindungsgemäße Haushaltsgeschirrspülmaschine in einer schematischen räumlichen Ansicht;
- Fig. 2: eine detailliertere Teildarstellung der Geschirrspülmaschine der Fig. 1, wobei ein Teil einer Bodenwanne des Spülbehälters und ein Teil einer mittels einer Klebeschicht aufgeklebten Bitumenmatte dargestellt ist;
- Fig. 3: eine Darstellung zur Veranschaulichung eines Verfahrens und einer Vorrichtung zur Herstellung der Geschirrspülmaschine der Fig. 1 und der Fig. 2; und
- Fig. 4: eine weitere Darstellung zur Veranschaulichung eines Verfahrens zur Herstellung der Geschirrspülmaschine der Fig. 1 und der Fig. 2.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

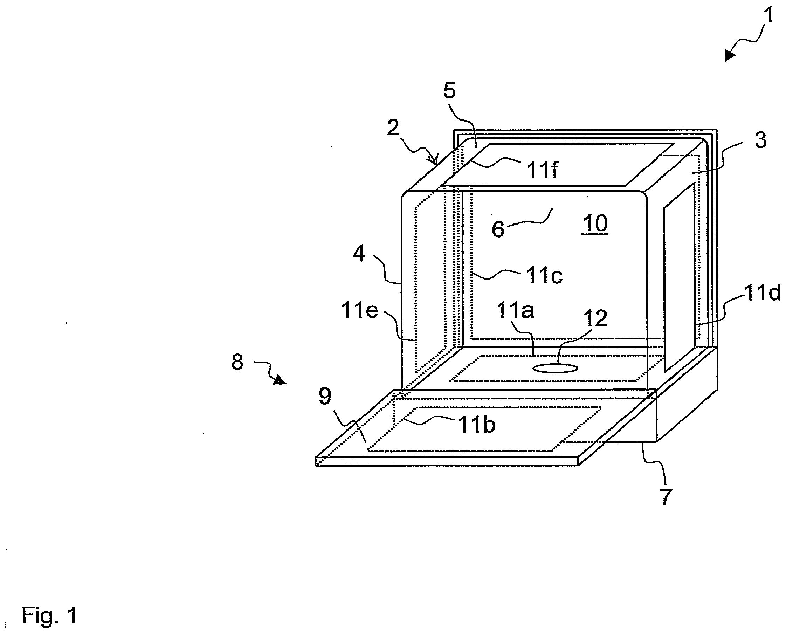

Die Fig. 1 zeigt einen kastenförmigen Spülbehälter 1 eines Ausführungsbeispiels einer erfindungsgemäßen Geschirrspülmaschine. Der Spülbehälter 1 umfasst ein erstes Wandungsteil 2, welches eine erste Seitenwand 3, eine zweite Seitenwand 4 und eine Decke 5 des kastenförmigen Spülbehälters 1 bildet. Ein derartiges erstes Wandungsteil 2 wird auch als Spülbehälterhaube 2 bezeichnet. Diese hat hier die Querschnittsgeometrieform eines auf den Kopf gestellten "U's". Ein zweites Wandungsteil 6 des Spülbehälters 1 ist als Rückwand ausgebildet. Ebenso weist der Spülbehälter 1 als drittes Wandungsteil 7 eine Bodenwanne auf. Die Spülbehälterhaube 2 und die Rückwand 6 sind hier im vorliegenden Ausführungsbeispiel jeweils als Stanzbiegeteil 2, 6 aus Edelstahlblech ausgebildet. Demgegenüber handelt es sich bei der Bodenwanne 7 um ein Spritzgussteil 7 aus Kunststoff, insbesondere aus Polypropylen (PP).

Um eine offene Seite des Spülbehälters 1 verschließen zu können, ist dem Spülbehälter 1 eine bewegbare Tür 8 zugeordnet, welche als viertes Wandungsteil 9 eine Innentür aufweist, die ebenfalls ein Stanzbiegeteil aus Edelstahlblech sein kann. Die Tür 8 ist in der Fig. 1 in einer Offen-Stellung gezeigt und kann durch Verschwenken in eine Geschlossen-Stellung überführt werden, so dass eine geschlossene Spülkammer 10 entsteht, in der Spülgut, beispielsweise Geschirr, durch Beaufschlagung mit einer Spülflüssigkeit gereinigt werden kann. Die Spülkammer 10 ist dabei durch die Innenseiten der Wandungsteile 2, 6, 7, 9 begrenzt, so dass ein unkontrollierter Austritt von Spülflüssigkeit vermieden ist. Die Anordnung der Wandungsteile 2, 6, 7, 9 ist dabei beispielhaft, wobei auch andere Anordnungen von Wandungsteilen denkbar sind. Beispielsweise könnte eine Tür an der Oberseite der Spülkammer 10 vorgesehen sein, so dass die Spülkammer 10 von oben her beladbar ist. Ebenso könnte die Spülkammer 10 in einem Spülbehälter angeordnet sein, der als ausziehbare Schublade ausgeführt ist.

Die den Spülbehälter begrenzenden Wandungsteile 2, 6, 7, 9 sind während der Durchführung eines Spülgangs an ihrer Innenseite mit umgewälzter Spülflüssigkeit beaufschlagt, so dass sie zu Schwingungen angeregt werden können, welche unerwünschte Geräusche verursachen können. Es ist aber auch möglich, dass derartige Schwingungen durch nicht gezeigte Aktoren der Geschirrspülmaschine, wie beispielsweise Pumpen, Gebläse oder Ähnliches, erzeugt werden. Da die Wandungsteile 2, 6, 7, 9 dünnwandig ausgeführt sind, kann sich eine besonders starke Geräuschentwicklung ergeben.

Um nun eine störende Geräuschentwicklung zu verhindern oder wenigstens zu verringern und/oder schallzudämmen, ist eine Entdröhnung und/oder Schallbedämmung beziehungsweise Schalldämmung der Wandungsteile 2, 6, 7, 9 mittels vorkonfektionierter Bitumenmatten 11a bis 11f vorgesehen.

Die Bitumenmatten 11a bis 11f sind Matten, welche unter Verwendung eines Bindemittels aus Bitumen, auch Erdpech genannt, oder aus bitumenartigen Bindemitteln, wie beispielsweise Polymerbitumen, Teere, Peche und/oder Destillationsrückstände von Fetten und Ölen, hergestellt sind. Der Begriff "vorkonfektioniert" bedeutet dabei insbesondere, dass die jeweilige Bitumenmatte 11a bis 11f zunächst unabhängig von dem Kunststoffbauteil aus Polypropylen, für welches sie vorgesehen ist, hier also unabhängig von den Wandungsteilen 2, 6, 7, 9, als Halbzeug mit definierten Abmessungen, Dicke, Geometrieform und/oder Struktur, und so weiter gefertigt wird, um sie dann an dem jeweiligen Wandungs teil 2, 6, 7, 9 befestigen zu können. Eine vorkonfektionierte Bitumenmatte 11a bis 11f kann beispielsweise hergestellt werden, indem ein Stück der gewünschten Größe aus einer Basismatte ausgeschnitten oder ausgestanzt wird.

Die Entdröhnung und/oder Schallbedämmung der Wandungsteile 2, 6, 7, 9 wird nun insbesondere dadurch erreicht, dass mittels der Bitumenmatten 11a bis 11f jeweils eine zusätzliche Masse auf das typischerweise dünnwandige Wandungsteil 2, 6, 7, 9, aufgebracht wird, so dass die Frequenzen der auftretenden Schwingungen kleiner werden, so dass die entstehenden Geräusche weniger störend sind. Zudem kann durch innere Reibung in den Bitumenmatten zumindest ein Teil der Schwingungsenergie in Wärme umgewandelt werden, so dass durch diese schalldämpfende Eigenschaft der Bitumenmatten die Intensität der erzeugten Geräusche abnimmt. Die Bitumenmatten 11a bis 11f sind zweckmäßigerweise an von der Spülkammer weg weisenden, äußeren Oberflächen der Wandungsteile 2, 6, 7, 9 angebracht, so dass die Bitumenmatten 11a bis 11f nicht mit Spülflüssigkeit beaufschlagt werden.

Im Ausführungsbeispiel ist eine erste Bitumenmatte 11a zur Entdröhnung und/oder Schallbedämmung beziehungsweise Schalldämmung der Bodenwanne 7 vorgesehen. Die erste Bitumenmatte 11a weist beispielhaft einen rechteckigen Umriss und etwa in ihrem Zentrum eine kreisförmige Öffnung für einen nur angedeuteten Pumpentopf 12 in der Bodenwanne 7 des Spülbehälters 1 der Geschirrspülmaschine auf. Eine zweite rechteckige Bitumenmatte 11b ist zur Entdröhnung der Innentür 9 und eine dritte rechteckige Bitumenmatte 11c zur Entdröhnung der Rückwand 6 vorgesehen. Die Spülbehälterhaube 2 ist mittels einer vierten Bitumenmatte 11d, welche in einem Bereich der ersten Seitenwand 3 angeordnet ist, mittels einer fünften Bitumenmatte 11e, welche in einem Bereich der zweiten Seitenwand 4 angeordnet ist, und mittels einer sechsten Bitumenmatte 11f, welche in einem Bereich der Decke 5 angeordnet ist, entdröhnt und/oder schallgedämmt. Die Bodenwanne 7 bildet dabei insbesondere eine Deckenwandung einer Kunststoff-Bodenbaugruppe oder eines Basisträgerbauteils, die oder das unterhalb des Spülbehälters 1 angeordnet ist.

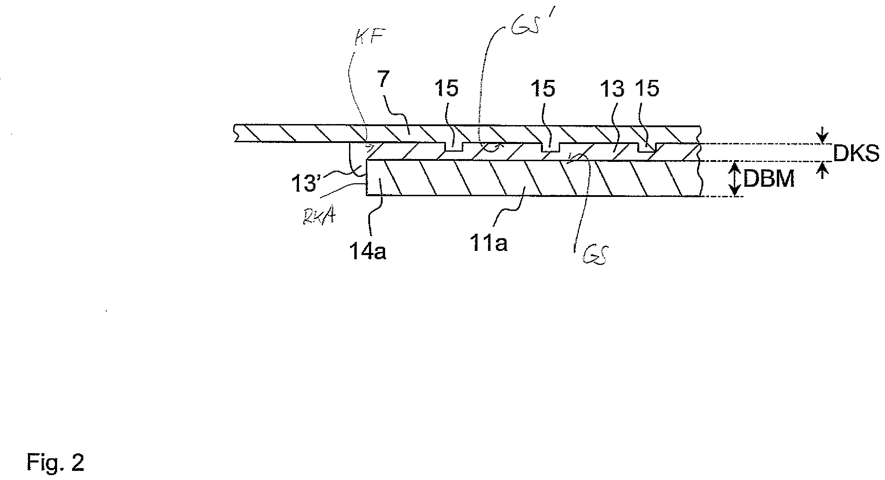

Die Fig. 2 zeigt beispielhaft eine detailliertere Teildarstellung der Geschirrspülmaschine der Fig. 1, wobei ein Teil der Bodenwanne 7 des Spülbehälters 1 und ein Teil einer an der Unterseite der Bodenwanne mittels einer Klebeschicht 13 aufgeklebten Bitumenmatte 11a dargestellt ist. Die folgenden Erläuterungen zur Befestigung der Bitumenmatte 11a mittels der Klebeschicht 13 an der Bodenwanne 7 gelten sinngemäß auch für die Befestigung der Bitumenmatten 11b bis 11f an den anderen zu entdröhnenden und/oder schallzubedämmenden Wandungsteilen 2, 6, 9.

Erfindungsgemäß ist eine Klebeschicht 13 aus einem im fertigen Montagezustand der Geschirrspülmaschine reaktiv ausgehärteten bituminösen Gemisch zum Befestigen der vorkonfektionierten Bitumenmatte 11a an der Unterseite der Bodenwanne 7 vorgesehen.

Reaktiv aushärtbare bituminöse Gemische umfassen dabei insbesondere wenigstens ein Basisbindemittel aus Bitumen, auch Erdpech genannt, oder aus bitumenartigen Bindemitteln, welches bei einer vorgesehenen Verarbeitungstemperatur eine derart hohe Viskosität aufweist, dass es sich nahezu wie ein Festkörper verhält.

Um nun das bituminöse Gemisch zu ein oder mehreren Klebewülsten formen, diese auf die einander zugewandten Klebekontaktflächen der Bitumenmatte und der Bodenwanne aufbringen und aus diesen Klebewülsten schließlich durch Zusammendrücken von Bitumenmatte und Bodenwanne eine w Klebeschicht formen zu können, die die Klebekontaktfläche der Bitumenmatte und die dieser zugewandte, korrespondierende Klebekontaktfläche an der Unterseite der Bodenwanne jeweils weitgehend vollständig und vollflächig, das heißt geschlossen bedeckt, enthält es vorzugsweise wenigstens ein Fluxmittel, welches die Viskosität des Gemischs soweit absenkt, dass es bei der vorgesehenen Verarbeitungstemperatur fließfähig, insbesondere zähflüssig ist, sich also vorzugsweise wie eine verformbare Masse verhält. Fluxmittel sind dabei insbesondere schwerflüchtige Lösungsmittel, welche auch nach dem Aushärten des bituminösen Gemischs in dem bituminösen Gemisch verbleiben, also nicht ausdunsten.

Um zu bewirken, dass die Klebeschicht aus dem ursprünglich fließfähigen bituminösen Gemisch, die nach der Formung von ein oder mehreren Klebewülsten aus diesen durch Zusammendrücken von Bitumenmatte und Bodenwanne vollflächig erzeugt worden ist, aushärtet, wird dem Gemisch vor der Formung der ein oder mehreren Klebewülste und der daraus erzeugten Klebeschicht wenigstens ein Reaktivzusatz zur Erzeugung einer die Viskosität des Gemischs erhöhenden physikalischen und/oder chemischen Wirkung zugegeben. Dabei kann die Wirkung des Reaktivzusatzes selbsttätig von dem Reaktivzusatz oder durch die zusätzliche Zugabe wenigstens eines Aktivators in Gang gesetzt werden.

Der Reaktivzusatz kann, gegebenenfalls in Zusammenwirkung mit dem Aktivator, insbesondere die Wirkung des Fluxmittels vorzugsweise irreversibel aufheben, beispielsweise durch Vernetzung, Fällung oder durch Bindung an das Basisbindemittel.

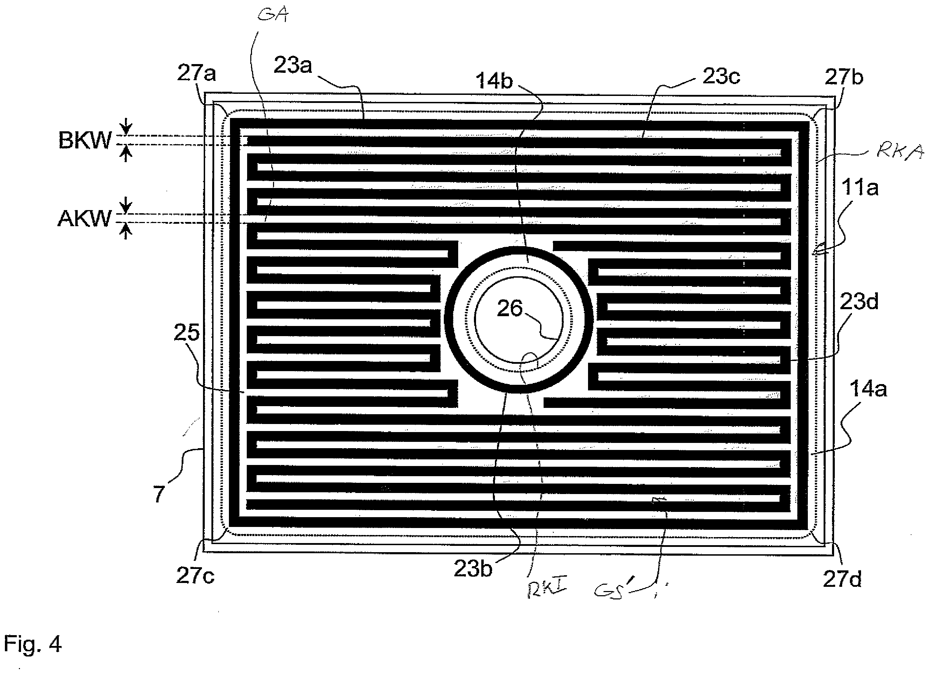

Die Klebeschicht 13 ist zweckmäßigerweise so ausgebildet, dass sie einen wulstförmigen Abschnitt 13' aufweist, der einen äußeren Randkantenbereich RKA der Bitumenmatte 11a wenigstens teilweise umschließt. Hierdurch erhält die Bitumenmatte 11a eine zusätzliche auf ihre Seitenkantenfläche wirkende Fixierung, so dass die Dauerhaftigkeit der Klebeverbindung verbessert wird. Die Seitenkantenfläche der Bitumenmatte 11a verläuft dabei quer, insbesondere senkrecht zur Klebekontaktfläche GS, mit der die Bitumenmatte mittels der Klebschicht 13 an der unterseitigen Klebekontaktfläche GS' der Bodenwanne 7 anhaftet. Zudem kann so die gemeinsame Kontaktfläche der Bodenwanne 7 und der Klebeschicht 13 vergrößert werden, so dass die Verbindung von Bodenwanne 7 und Klebeschicht 13 belastbarer, insbesondere gegenüber etwaig angreifenden Scher- oder Abschälkräften weitgehend unempfindlich wird. Insbesondere wird dazu wenigstens eine Klebewulst wie zum Beispiel 23a (siehe Fig. 4) aus dem reaktiv aushärtungsfähigen, bituminösen Gemisch derart ausgebildet und aufgebracht, dass sie beim Zusammendrücken der Bitumenmatte 11a auf die Unterseite der Bodenwanne 7 aus einer randkantenseitigen Klebefuge KF zwischen der Bodenwanne 7 und der Bitumenmatte 11a hervorquillt und den äußeren Randkantenabschnitt RKA der Bitumenmatte 11a teilweise oder ganz einfasst. In der Fig. 4 ist die Klebewulst 23a als eine einzelne zusammenhängende Raupenbahn ausgebildet, die die Klebekontaktfläche GS' auf der Unterseite der Bodenwanne 7 randseitig in Form eines Rechteckrahmens umschließt, das heißt sie verläuft entlang einer ringförmigen Randzone 14a auf der Klebekontaktfläche ringsum den Außenumfang deren äußeren Kontur folgend. Dabei korrespondiert diese äußere Randzone 14a der Klebekontaktfläche GS' der Bodenwanne 7 mit der äußeren Randzone der Klebekontaktfläche GS der Bitumenmatte 11a.

Zweckmäßigerweise ist die Bitumenmatte 11a auf eine dreidimensional strukturierte Fläche der Bodenwanne 7 aufgeklebt. Hierdurch kann die Kontaktfläche der Bodenwanne 7 mit der Klebeschicht 13 weiter vergrößert werden, so dass die Verbindung von Bodenwanne 7 und Klebeschicht 13 noch belastbarer wird.

Dabei weist die strukturierte Fläche im Ausführungsbeispiel Stege 15 als Erhöhungen auf. Die Stege 15 bewirken eine dreidimensionale Strukturierung der Oberfläche und können insbesondere an Spritzgussteilen, wie beispielsweise der Bodenwanne 7, einfach ausgebildet werden. Alternativ könnten zur Strukturierung der Oberfläche auch eine oder mehrere Rillen oder allgemein ausgedrückt Vertiefungen vorgesehen sein.

Da die Bodenwanne 7 ein Kunststoffteil ist, das insbesondere aus Polypropylen, hergestellt sein kann, kann die Haftfähigkeit des reaktiv aushärtungsfähigen bituminösen Gemischs auf Kunststoff genutzt werden, um eine stoffschlüssige, materialinnige und dadurch stabile Verbindung zwischen der Bodenwanne 7 und der Bitumenmatte 11a zu erzeugen. Die Klebeschicht 13 aus dem reaktiv aushärtungsfähigen bituminösen Gemisch ist für die Bodenwanne 7 aus Kunststoff besonders gut geeignet, da das Aufkleben der Bitumenmatte 11a bei Temperaturen erfolgen kann, welche geringer als bei der Verwendung eines Heißklebers sind, so dass temperaturbedingte Schäden vermieden werden können. Insbesondere kann eine Raumtemperatur von etwa 20 °C genügen.

Vorteilhafterweise ist die Bodenwanne 7 durch eine Schichtanordnung entdröhnt und/oder schallbedämmt, welche ausschließlich durch die Bitumenmatte 11a und die Klebeschicht 13 gebildet ist. Hierdurch kann eine wirksame und dauerhafte Entdröhnung der Bodenwanne 7 auf einfache Weise bewirkt werden. Grundsätzlich wäre es aber möglich, mehrere Klebeschichten 13 und Bitumenmatten 11a stapelartig anzuordnen. Auch können mehrere Bitumenmatten wie zum Beispiel 23c, 23d in der Fig. 4 nebeneinander mit und ohne Abstand zueinander auf, an dem und/oder in dem jeweilig zu entdröhnenden und/oder schallzudämmenden Kunststoffbauteil aus Polypropylen mittels ein oder mehrerer strangartig oder linienartig aufgebrachter Klebewülste aus dem reaktiv aushärtungsfähigen bituminösen Gemisch angeklebt werden. Dabei werden die ein oder mehreren Klebewülste durch das Andrücken der Bitumenmatte auf die gewünschte Klebekontaktfläche des jeweilig zu entdröhnenden und/oder schallzudämmenden Kunststoffbauteils aus Polypropylen, hier der Bodenwanne, derart zusammengepresst, dass sich eine weitgehend flächige Klebeschicht ergibt, die auch zuvor von Reaktivbitumen unbedeckte Gebiete beziehungsweise Zonen innerhalb der gewünschten Klebekontaktfläche ausfüllt.

Bevorzugt weist die Bitumenmatte 11a eine maximale Dicke DBM in einem Bereich von 0,8 bis 8 mm, bevorzugt in einem Bereich von 1,2 bis 6 mm, besonders bevorzugt in einem Bereich von 1,6 bis 4 mm, auf. In den genannten Bereichen kann bei geringem Materialeinsatz eine ausreichende Entdröhnung und/oder Schallbedämmung der Bodenwanne 7 der Geschirrspülmaschine erzielt werden. Dabei kann die Bitumenmatte 11a wie gezeigt eine gleichbleibende Dicke oder aber eine variable Dicke aufweisen.

Vorteilhafterweise weist die Klebeschicht 13 eine maximale Dicke DKS in einem Bereich von 0,1 bis 6 mm, bevorzugt in einem Bereich von 0,2 bis 3 mm, besonders bevorzugt in einem Bereich von 0,4 bis 1,5 mm, auf. In den genannten Bereichen ist die Klebeschicht 13 hinreichend dick, um auch bei ungewollten Unebenheiten und/oder bei einer gewollten dreidimensionalen Strukturierung der Oberfläche der Bodenwanne 7 und/oder der Oberfläche der Bitumenmatte 11a einen vollflächigen Kontakt der Klebeschicht 13 mit der Bodenwanne 7 und/oder mit der Bitumenmatte 11a zu erzielen. Hierdurch wird eine besonders stabile Anordnung mit besonders guter Entdröhnwirkung erreicht. Dabei wird gleichzeitig ein überhöhter Materialeinsatz vermieden.

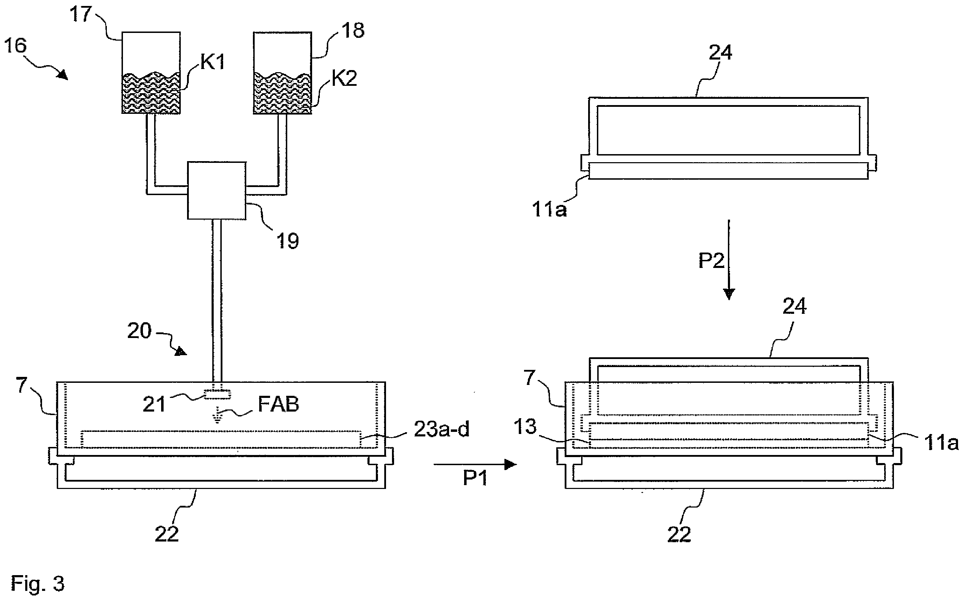

Die Fig. 3 zeigt eine Darstellung zur Veranschaulichung eines Verfahrens und einer Vorrichtung zur Herstellung der Geschirrspülmaschine der Fig. 1 und der Fig. 2.

In der Fig. 3 ist beispielhaft gezeigt, wie die vorkonfektionierte Bitumenmatte 11a auf die Bodenwanne 7 aufgeklebt wird.

Die erfindungsgemäße Vorrichtung umfasst hierzu Mittel 16 zum Aufbringen eines gebrauchsfertigen, fließfähigen und reaktiv aushärtungsfähigen bituminösen Gemischs FAB auf die Bodenwanne 7. Alternativ oder zusätzlich könnten auch Mittel zum Aufbringen des gebrauchsfertigen, fließfähigen und reaktiv aushärtungsfähigen bituminösen Gemischs FAB auf die Bitumenmatte 11a vorgesehen sein.

Die Mittel 16 zum Aufbringen eines gebrauchsfertigen, fließfähigen und reaktiv aushärtungsfähigen bituminösen Gemischs FAB umfassen im Ausführungsbeispiel einen ersten Behälter 17 zur Aufnahme einer ersten lagerfähigen Komponente K1 des reaktiv aushärtungsfähigen bituminösen Gemischs sowie einen zweiten Behälter 18 zur Aufnahme einer zweiten lagerfähigen Komponente K2 des reaktiv aushärtungsfähigen bituminösen Gemischs.

Dabei kann die erste Komponente K1 ein Basisbindemittel, ein Fluxöl und einen Reaktivzusatz enthalten, welche so aufeinander abgestimmt sind, dass zum Aushärten ein Aktivator erforderlich ist, wobei die zweite Komponente K2 den Aktivator enthält.

Alternativ kann die erste Komponente K1 ein Basisbindemittel und ein Fluxöl enthalten, welche so aufeinander abgestimmt sind, dass zum Aushärten ein Reaktivzusatz erforderlich ist, wobei die zweite Komponente K2 den Reaktivzusatz enthält.

Gemäß einer weiteren Alternative kann die erste Komponente K1 ein Basisbindemittel und ein Fluxöl enthalten, welche so aufeinander abgestimmt sind, dass zum Aushärten ein Reaktivzusatz und ein Aktivator erforderlich ist, wobei die zweite Komponente K2 den Reaktivzusatz und den Aktivator enthält.

In allen genannten Fällen ist es nun möglich, durch Mischen der ersten Komponente K1 und der zweiten Komponente K2, ein gebrauchsfähiges, fließfähiges und aushärtungsfähiges bituminöses Gemisch FAB herzustellen. Ein gebrauchsfähiges, fließfähiges und aushärtungsfähiges bituminöses Gemisch FAB umfasst sämtliche notwendigen Bestandteile, um in fließfähiger Form, gegebenenfalls in zähflüssiger Form, auf die Bodenwanne 7 und/oder auf die Bitumenmatte 11a aufgebracht werden zu können, und um aushärten zu können. Hierdurch kann die Klebeschicht 13 insbesondere durch lediglich einmaliges Auftragen beziehungsweise Aufbringen von Material hergestellt werden.

Hierbei weist die erfindungsgemäße Vorrichtung einen Mischer 19 zum Mischen der ersten Komponente K1 und der zweiten Komponente K2 auf, der so mit dem ersten Behälter 17 verbunden ist, dass ihm die erste Komponente K1 zuführbar ist, und der so mit dem zweiten Behälter 18 verbunden ist, dass ihm die zweite Komponente K2 ebenfalls zuführbar ist. Das so hergestellte gebrauchsfähige, fließfähige und aushärtungsfähige bituminöse Gemisch FAB kann dann einer Auftragseinrichtung 20 zum Auftragen beziehungsweise Aufbringen des fließfähigen bituminösen Gemischs FAB auf die Bitumenmatte 11a zugeführt werden. Insbesondere kann das gebrauchsfähige, fließfähige und aushärtungsfähige bituminöse Gemisch FAB mittels einer Strangpresse oder sonstigen Düseneinrichtung auf die Bitumenmatte 11a aufgebracht werden. Die Auftragseinrichtung 20 kann dabei wenigstens eine Düse 21 zum Auspressen eines Strangs oder einer Raupenbahn des gebrauchsfähigen, fließfähigen und aushärtungsfähigen bituminösen Gemischs FAB auf die Bodenwanne 7 aufweisen.

Falls das reaktiv aushärtungsfähige bituminöse Gemisch ausreichend flüssig ist, kann als Auftragsvorrichtung gegebenenfalls eine Sprüheinrichtung zum Aufsprühen von ein oder mehreren Klebewülsten zweckmäßig sein.

Die Bodenwanne 7 wird der Sprüheinrichtung 20 durch ein Handhabungsmittel 22 zum Handhaben der Bodenwanne 7 vorgelegt. Die Handhabungsmittel 22 und die Sprüheinrichtung 20 sind relativ zueinander bewegbar, so dass aus dem gebrauchsfertigen bituminösen Gemisch FAB linien-, schnur- oder strangförmige Klebewülste 23a bis 23d aus jeweils einer zusammenhängenden Raupenbahn hergestellt werden können. Diese Klebewülste verdecken sich in der Fig. 3 aufgrund der seitlichen Perspektive gegenseitig.

Die aufzuklebende Bitumenmatte 11a kann durch ein Handhabungsmittel 24 zum Handhaben der Bitumenmatte 11a bereitgehalten werden. Die Handhabungsmittel 22 und 24 der vorteilhaften Aufbringungsvorrichtung sind dabei so ausgebildet, dass sie relativ zueinander beweglich sind. Dabei ist es durch diese ermöglicht, die mit den in einem ersten Arbeitsschritt linien-, schnur- oder strangförmigen Klebewülsten 23a bis 23d versehene Bodenwanne 7 und die Bitumenmatte 11a so im zweiten Arbeitsschritt zusammenzudrücken, dass sich die Klebewülste 23a bis 23d zu der in der Fig. 2 gezeigten vollflächigen beziehungsweise geschlossenen Klebeschicht 13 umformen. Im Beispiel der Fig. 3 wird hierzu zunächst das Handhabungsmittel 22, wie durch die Pfeile P1 angedeutet, in eine Position zum Zusammenfügen der Bodenwanne 7 und der Bitumenmatte 11a bewegt. Dann wird das Handhabungsmittel 24 in Richtung des nun feststehenden Handhabungsmittels 22 bewegt. Es wäre aber auch möglich, ausschließlich nur das Handhabungsmittel 22 oder ausschließlich nur das Handhabungsmittel 24 zum Zusammendrücken der Bitumenmatte 11a und der Bodenwanne 7 zu bewegen.

Vorteilhafterweise beträgt die Zeit zwischen der Herstellung des gebrauchsfähigen, fließfähigen und aushärtungsfähigen bituminösen Gemischs FAB und dem Zusammendrücken der Bodenwanne 7 und der Bitumenmatte 11a höchstens 90 s, bevorzugt höchstens 75 s, besonders bevorzugt höchsten 60 s. Auf diese Weise ist es möglich, besonders schnell aushärtende bituminöse Gemische FAB zu verwenden, was die Herstellzeit der Geschirrspülmaschine verringert. Zudem ist so einem Ablösen der Bitumenmatte 11a von der Bodenwanne 7 während der Aushärtezeit des bituminösen Gemischs entgegengewirkt.

Die Vorrichtung kann insbesondere vollautomatisiert sein und beispielsweise durch einen Industriecomputer gesteuert sein.

Die Fig. 4 zeigt eine Untersicht auf die Bodenwanne 7 der vorhergehenden Figuren, welche mit Klebewülsten 23a bis 23d versehen ist, wobei die Konturen der Bitumenmatte 11a in ihrer Position beim Zusammendrücken von Bodenwanne 7 und Bitumenmatte 11a durch gestrichelte Linien angedeutet sind. Dabei ist die Bitumenmatte 11a "durchsichtig" dargestellt, da sie ansonsten die Klebewülste 23a bis 23d verdecken würde.

Die linienförmigen Klebewülste 23a bis 23d, auch Kleberaupen genannt, sind jeweils zumindest teilweise von wenigstens einem Bitumenmassen- unbeaufschlagten Bereich 25 umrandet. Hierdurch kann das Auftragen des bituminösen Gemischs FAB im Vergleich zu solchen Lösungen beschleunigt werden, bei denen die Bodenwanne 7 und/oder die Bitumenmatte 11a von Anfang an nur vollflächig beaufschlagt wird, da beim erfindungsgemäßen Verfahren bei identischer Breite BKW der aufgebrachten linienförmigen Klebewulste 23a bis 23d die Gesamtstrecke der erforderlichen Relativbewegung verringert werden kann.

Indem weiterhin vorgesehen ist, dass vor dem Aushärten des bituminösen Gemischs die Bodenwanne 7 und die Bitumenmatte 11a derart zusammengedrückt werden, dass sich das bituminöse Gemisch in den bitumenmassen-freien Bereich 25 ausbreitet, so dass eine vollflächige Klebeschicht 13 entsteht, kann nun eine besonders gute Entdröhnung erzielt werden. So stellt die derart hergestellte Klebeschicht 13 insbesondere eine enge Schwingungskopplung zwischen der Bodenwanne 7 und der Bitumenmatte 11a sicher, so dass eine Schwingung der Bodenwanne 7 unabhängig von der Bitumenmatte 11a weitgehend unterbunden ist.

Im Ausführungsbeispiel ist vorgesehen, dass das bituminöse Gemisch FAB in einem ersten Arbeitsschritt ausschließlich auf die Bodenwanne 7 aufgebrächt wird. Hierdurch wird das erfindungsgemäße Verfahren ohne funktionelle Nachteile besonders einfach durchführbar. Insbesondere wird gerade deshalb die Bodenwanne 7 mit dem bituminösen Gemisch belegt, weil diese in der Regel formstabiler als die Bitumenmatte 11a und damit im noch unausgehärteten Zustand der bituminösen Masse leichter handhabbar ist.

Vorteilhafterweise ist vorgesehen, dass eine erste Klebewulst 23a derart ausgebildet wird, dass sie vor dem Zusammendrücken der Bodenwanne 7 und der Bitumenmatte 11a nach Art einer geschlossenen Masche längs eines äußeren Randbereichs 14a der Bitumenmatte 11a verläuft. Auf diese Weise wird eine besonders dauerhafte und stabile Klebeverbindung erzielt, so dass die Gefahr eines Ablösens der Bitumenmatte 11a im späteren Betrieb der Geschirrspülmaschine an dem äußeren Randbereich 14a der Klebekontaktfläche GS der Bitumenmatte 11a verringert ist. Insbesondere kann so die Ausbildung des in der Fig. 2 gezeigten wulstförmigen Abschnitts 13' der Klebeschicht 13 gefördert werden, der die Bitumenmatte 11a seitlich stützt.

Eine weitere maschenförmige Klebewulst 23b verläuft dabei längs eines inneren Randbereichs 14b der Bitumenmatte 11a, der eine Durchbruchsöffnung 26 der Bodenwanne 7 für einen Pumpentopf umrandet. Auf diese Weise wird die Klebeverbindung weiter verbessert, indem die Gefahr eines Ablösens der Bitumenmatte 11a im späteren Betrieb der Geschirrspülmaschine an dem inneren Randbereich 14b der Bitumenmatte 11a verringert wird, der um deren mittige Durchbruchsöffnung auf der Klebekontaktfläche GS herumläuft. Insbesondere kann so die Ausbildung eines wulstförmigen Abschnitts 13' sowohl entlang der Außenkante RKA als auch entlang der Innenkante RKI der Bitumenmatte 11a gefördert werden, der die Bitumenmatte 11a zusätzlich oder alternativ seitlich stützt.

Weiterhin sind eine erste mäanderförmige Klebewulst 23c und ein zweite mäanderförmige Klebewulst 23d vorgesehen. Mittels der mäanderförmigen Klebewülste 23c und 23d kann die zwischen den Randbereichen 14 a und 14b gelegene Fläche der Bodenwanne 7 gleichmäßig und mit nur einer Unterbrechung des Aufbringvorgangs mit dem bituminösen Gemisch versehen werden. Hierdurch kann das Verfahren besonders schnell und einfach ausgeführt werden, was insbesondere im Vergleich zu solchen Lösungen gilt, bei denen einzelne, das heißt separate Klebewülste mit gestückelten Bahnen sowie mit Querabstand nebeneinander gesetzt werden.

Vorteilhafterweise sind die Eckbereiche 27a-27d der Bitumenmatte 11a abgerundet. Hierdurch kann die Dauerhaftigkeit der Klebeverbindung alternativ oder zusätzlich verbessert werden.

Die abgerundeten Eckbereiche 27a-27d weisen bevorzugt einen Radius von mindestens 2 mm, bevorzugt mindestens 4 mm, besonders bevorzugt wenigstens 6 mm, und/oder von höchstens 30 mm, bevorzugt höchstens 20 mm, besonders bevorzugt höchstens 15 mm, auf. Die angegebenen Mindestwerte für die Radien stellen eine gute Haltbarkeit der Klebeverbindung sicher, wobei durch die angegebenen Maximalradien sichergestellt ist, dass auch in Eckbereichen der Bodenwanne 7 eine Entdröhnung und/oder Schallbedämmung durch die Bitumenmatte 11a möglich ist.

Bevorzugt beträgt die mittlere Breite BKW der Klebewülste 23a bis 23d wenigstens 2 mm, bevorzugt wenigstens 4 mm, besonders bevorzugt wenigstens 6 mm, und/oder höchstens 30 mm, bevorzugt höchstens 20 mm, besonders bevorzugt höchstens 15 mm. Durch die angegebenen Mindestwerte kann die Gesamtlänge der Klebewülste 23a bis 23d gering gehalten werden, wobei durch die angegebenen Maximalwerte ein hinreichend gleichmäßiger Auftrag des bituminösen Gemischs FAB pro Fläche erzielt wird, um beim späteren Zusammendrücken der Bodenwanne 7 und der Bitumenmatte 11a eine vollflächige Klebeschicht 13 erreichen zu können.

Vorteilhafterweise beträgt der mittlere Abstand AKW zweier nebeneinander verlaufender Abschnitte, insbesondere parallel verlaufender Abschnitte, einer der Klebewülste 23a bis 23d oder mehrerer Klebewülste 23a bis 23d wenigstens das 1,0-fache der mittleren Breite der Klebewulst oder der Klebewülste 23a bis d, bevorzugt wenigstens das 1,2-fache, besonders bevorzugt wenigstens das 1,5-fache, und/oder höchstens das 4,0-fache der Breite der Klebewulst oder der Klebewülste, bevorzugt höchstens das 3,0-fache, besonders bevorzugt höchstens das 2,0-fache. Durch die angegebenen Mindestwerte kann die Gesamtlänge der Klebewülste 23a bis d weiter verringert werden, wobei durch die angegebenen Maximalwerte ein hinreichend gleichmäßiger Auftrag des bituminösen Gemischs FAB pro Fläche erzielt wird, um beim späteren Zusammendrücken der Bodenwanne 7 und der Bitumenmatte 11a eine vollflächige Klebeschicht 13 erreichen zu können.

Dabei beträgt die aufgesprühte Masse des bituminösen Gemischs bezogen auf die der Bodenwanne 7 zugewandte Fläche der Bitumenmatte 11a wenigstens 0,1 kg/m², bevorzugt wenigstens 0,2 kg/m², besonders bevorzugt wenigstens 0,3 kg/m², und/oder höchstens 2,0 kg/m², bevorzugt höchstens das 1,2 kg/m², besonders bevorzugt höchstens 0,8 kg/m². Durch die angegebenen Mindestwerte kann eine hinreichend stabile Klebeverbindung sichergestellt werden, wobei durch die angegebenen Maximalwerte verhindert wird, dass die Klebeschicht im späteren Betrieb der Geschirrspülmaschine bei Erwärmung verläuft.

Gegebenenfalls kann die Bodenwanne 7 auch mit mehreren Bitumenmatten beklebt werden, was insbesondere dann von Vorteil ist, wenn die zu beklebende Seite der Bodenwanne 7 stark zerklüftet ist.

Zusammenfassend betrachtet ist somit ein Verfahren zur Herstellung einer Geschirrspülmaschine, insbesondere einer Haushaltsgeschirrspülmaschine, mit wenigstens einem Kunststoffbauteil aus Polypropylen bereitgestellt, welches mit wenigstens einer Bitumenmatte, insbesondere einer vorkonfektionierten, Bitumenmatte, zur Entdröhnung und/oder Schallbedämmung des Kunststoffbauteils aus Polypropylen versehen ist. Dabei wird die jeweilige Bitumenmatte auf das Kunststoffbauteil aus Polypropylen aufgeklebt, indem ein gebrauchsfähiges, fließfähiges und reaktiv aushärtungsfähiges bituminöses Gemisch derart auf das Kunststoffbauteil aus Polypropylen und/oder auf die Bitumenmatte aufgebracht wird, dass wenigstens eine Klebewulst entsteht, die zumindest teilweise von wenigstens einem von dem reaktiv aushärtungsfähigen bituminösen Gemisch unbeaufschlagten Bereich umrandet ist, und indem vor dem Aushärten des reaktiv aushärtungsfähigen bituminösen Gemischs das Kunststoffbauteil aus Polypropylen und die Bitumenmatte zusammengedrückt werden.

Zweckmäßigerweise wird die wenigstens eine Klebewulst aus reaktiv aushärtungsfähigem bituminösen Gemisch derart ausgebildet und auf die Bitumenmatte und/oder das jeweilig zu entdröhnende und/oder schallzubedämmende Kunststoffbauteil aus Polypropylen aufgebracht, dass auch der ursprünglich von dem bituminösen Gemisch unbeaufschlagte Bereich nach dem Zusammendrücken des Kunststoffbauteils aus Polypropylen und der Bitumenmatte so bedeckt wird, dass eine im Wesentlichen vollflächige, das heißt weitgehend vollständig geschlossene Klebeschicht auf den einander zugewandten Kontaktflächen des Kunststoffbauteils und der Bitumenmatte entsteht.

Insbesondere wird die jeweilige Klebewulst wie zum Beispiel 23a bis 23d im Wesentlichen linien-, schnur- oder strangförmig auf das jeweilige Kunststoffbauteil aus Polypropylen, wie zum Beispiel die Bodenwanne 7, und/oder die diesem jeweilig zugeordnete Bitumenmatte, wie zum Beispiel 11a, vor deren Zusammendrücken aneinander aufgebracht.

Dabei kann es insbesondere vorteilhaft sein, wenn wenigstens eine Klebewulst wie zum Beispiel 23c, 23d in Form einer einzelnen, zusammenhängenden Raupenbahn, insbesondere mäanderförmig, auf das jeweilige Kunststoffbauteil aus Polypropylen, wie zum Beispiel 7, und/oder die Bitumenmatte, wie zum Beispiel 11a, vor dem Zusammendrücken des Kunststoffbauteils aus Polypropylen und der Bitumenmatte aufgebracht wird. Diese Auftragsart in Form einer durchgehenden Raupenbahn sorgt für einen beschleunigten Fertigungsablauf gegenüber Auftragsverfahren, bei denen eine Klebeschicht von Anfang an vollflächig wie zum Beispiel mittels einer Abziehspachtel oder eines Pinsels aufgetragen wird.

Alternativ dazu kann es gegebenenfalls auch ausreichend sein, wenn mehrere Klebewülste in Form von mehreren separaten Raupenbahnen auf das Kunststoffbauteil aus Polypropylen und/oder auf die jeweilige Bitumenmatte vor dem Zusammendrücken des Kunststoffbauteils aus Polypropylen und der Bitumenmatte aufgebracht werden.

Insbesondere kann es zweckmäßig sein, wenn vor dem Zusammendrücken des jeweiligen Kunststoffbauteils aus Polypropylen und der Bitumenmatte wenigstens eine Klebewulst auf einem Randbereich der Klebekontaktfläche des Kunststoffbauteils aus Polypropylen und/oder der Bitumenmatte derart aufgebracht wird, dass sie den Randbereich wie zum Beispiel 14a, 14b der jeweiligen Klebekontaktfläche als teilweise oder ganz geschlossene Masche oder Ringwulst umläuft. Der Randbereich kann dabei durch eine äußere Randzone entlang der Außenkontur der Klebekontaktfläche der Bitumenmatte und/oder des Kunststoffbauteils aus Polypropylen sein. Er kann aber auch durch eine innere Randzone gebildet sein, die zum Beispiel ringsum eine Durchbruchsöffnung in der Bitumenmatte und/oder in dem Kunststoffbauteil aus Polypropylen angeordnet ist. Durch eine derartig den jeweiligen Randbereich der Bitumenmatte und/oder des Kunststoffbauteils aus Polypropylen folgenden Raupenbahn aus dem reaktiv aushärtungsfähigen bituminösen Gemisch kann die Anhaftung der Bitumenmatte an dem Kunststoffbauteil aus Polypropylen verbessert werden. Ein unerwünschtes Abziehen oder Abschälen der Bitumenmatte zum Beispiel aufgrund deren Eigengewichts von dem Kunststoffbauteil aus Polypropylen, insbesondere in diesen Randbereichen der Bitumenmatte, über die Produktlebensdauer der Geschirrspülmaschine betrachtet kann weitgehend vermieden werden.

Zum selben Zweck kann es gegebenenfalls auch zweckmäßig sein, wenn die Bitumenmatte wenigstens einen abgerundeten Eckbereich aufweist.

Weiterhin kann es zur Erhöhung der Haltekraft der Bitumenmatte an dem Kunststoffbauteil aus Polypropylen auch vorteilhaft sein, wenn wenigstens eine Klebewulst derart ausgebildet und aufgebracht wird, dass sie beim Zusammendrücken des Kunststoffbauteils aus Polypropylen und der Bitumenmatte aus einer randkantenseitigen Klebefuge wie zum Beispiel KF zwischen dem Kunststoffbauteil aus Polypropylen und der Bitumenmatte hervorquillt und einen Randkantenabschnitt wie zum Beispiel den äußeren Randkantenabschnitt RKA der Bitumenmatte und/oder des Kunststoffbauteils aus Polypropylen teilweise oder ganz einfasst.

Die Erfindung beruht von dem Grundprinzip her insbesondere darauf, dass sich Reaktivbitumen überraschenderweise als Dickschichtkleber zur Aufbringung von, vorzugsweise vorkonfektionierten, Bitumenmatten auf Kunststoffbauteile aus Polypropylen einer Geschirrspülmaschine eignet. Dabei sind in vielen Fällen keine Vorbehandlungsmethoden, wie beispielsweise Beflammen, Plasmatieren, etc. des jeweilig zu entdröhnenden und/oder schallzudämmenden Kunststoffbauteils aus Polypropylen notwendig. Der Haftkleber besitzt zudem auch sehr gute Dämpfungseigenschaften zur Schwingungsreduzierung, was dem Ziel der Geräuschreduzierung zusätzlich zur Geräuschreduzierung durch die Bitumenmatte 11a bis 11f entgegenkommt. Die Applikation ist vorteilhaft in einem Zweikomponenten-Verfahren maschinell möglich.

Dabei kann das Material K1 und K2 (A- und B-Komponente) maschinell vermischt und über eine Düse wie zum Beispiel 21 unmittelbar aufgetragen werden.

Das angemischte Reaktivbitumenmaterial wie zum Beispiel FAB (Kleber für Bitumenmatten) kann linien- oder schnurförmig, vorzugsweise mäanderförmig, auf Kunststoffbauteile aus Polypropylen, wie zum Beispiel 2, 6, 7, 9, appliziert werden. Beim anschließenden Aufdrücken der Bitumenpatches wie zum Beispiel 11a bis 11f (Bitumenmatten) unter flächigem Druck entsteht durch die linienförmige, insbesondere mäanderförmige, Applikation eine vollflächige beziehungsweise geschlossene Klebeschicht 13, welche akustisch vorteilhaft ist.

Die Bitumenpatches können bevorzugt in weniger als 60 s auf dem Reaktivbitumenkleber appliziert werden, der vorzugsweise vorher auf dem jeweilig zu entdröhnenden und/oder schallzudämmenden Kunststoffbauteil aus Polypropylen aufgebracht worden ist. Ansonsten könnte die Reaktion des Klebers zu weit fortgeschritten und keine dauerhafte Klebeverbindung möglich sein.

Die Bitumenpatches weisen bevorzugt keine scharfen Außenecken auf, sondern sind in ihren Eckebereichen abgerundet. Radien bewirken eine bessere Haftung der Bitumenpatches.

Die Klebermenge kann gering gewählt werden, um insbesondere im späteren Betrieb der Geschirrspülmaschine ein Abrutschen der Bitumenpatches bei hohen Temperaturen zu vermeiden.

Es können sich insbesondere folgende Vorteile ergeben:
a. Mäanderförmige Applikation des Reaktivbitumenklebers möglich,
b. Applikationszeit nach Anmischen Reaktivbitumen < 60 s möglich,
c. Radien an den Bitumenpatches, um eine bessere Haftung und kein Ablösen zu erzielen, möglich.

Insbesondere sind in Bezug auf die vorstehend erläuterten, vorteilhaften Ausführungsbeispiele hinsichtlich der Figuren 1 bis 4 folgende Bezugszeichen verwendet worden:

### Bezugszeichenliste

- 1: Spülbehälter
- 2: Kunststoffbauteil aus Polypropylen; erstes Wandungsteil; Spülbehälterhaube
- 3: Seitenwand des Spülbehälters
- 4: Seitenwand des Spülbehälters
- 5: Decke
- 6: Kunststoffbauteil aus Polypropylen; zweites Wandungsteil; Rückwand
- 7: Kunststoffbauteil aus Polypropylen; drittes Wandungsteil; Bodenwanne
- 8: Tür
- 9: Kunststoffbauteil aus Polypropylen; viertes Wandungsteil; Innentür
- 10: Spülkammer
- 11a: Bitumenmatte
- 11b: Bitumenmatte
- 11c: Bitumenmatte
- 11d: Bitumenmatte
- 11e: Bitumenmatte
- 11f: Bitumenmatte
- 12: Pumpentopf
- 13: Klebeschicht
- 13': Seitlich hervorquellender Wulstabschnitt der Klebeschicht
- 14a: Äußerer Randbereich der Klebekontaktfläche der Bitumenmatte
- 14b: Innerer Randbereich der Klebekontaktfläche der Bitumenmatte
- 15: Steg des Kunststoffbauteils aus Polypropylen
- 16: Mittel zum Aufbringen des bituminösen Gemischs in fließfähigem und aushärtungsfähigem Zustand
- 17: Behälter für erste Komponente
- 18: Behälter für zweite Komponente
- 19: Mischer
- 20: Sprüheinrichtung
- 21: Düse
- 22: Mittel zum Handhaben des Kunststoffbauteils aus Polypropylen
- 23a: Klebewulst
- 23b: Klebewulst
- 23c: Klebewulst
- 23d: Klebewulst
- 24: Mittel zum Handhaben der Bitumenmatte
- 25: Von bituminöser Masse unbedeckter beziehungsweise unbelegter Bereich
- 26: Öffnung in Bitumenmatte und Bodenwanne für Pumpentopf
- 27: Abgerundete Ecke

- AKW: Abstand von Abschnitten der Klebewulste
- BKW: Breite des Klebewulstes
- DBM: Maximale Dicke der Bitumenmatte
- DKS: Maximale Dicke der Klebeschicht
- FAB: Fließfähiges und aushärtungsfähiges bituminöses Gemisch
- GA: Spaltfreiraum zwischen zwei benachbarten Verlegeabschnitten einer Klebewulst
- GS: Klebekontaktfläche der Bitumenmatte
- GS': Klebekontaktfläche an der Unterseite der Bodenwanne
- KF: Klebefuge
- K1: Erste Komponente
- K2: Zweite Komponente
- RKA: Äußerer Randkantenabschnitt der Bitumenmatte
- RKI: Innerer Randkantenabschnitt einer Durchbruchsöffnung in der Bitumenmatte

## Patentansprüche

1. Verfahren zur Herstellung einer Geschirrspülmaschine, insbesondere einer Haushaltsgeschirrspülmaschine, mit wenigstens einem Bauteil (2, 6, 7, 9), welches mit wenigstens einer Bitumenmatte (11a-f), insbesondere einer vorkonfektionierten, Bitumenmatte (11a bis 11f), zur Entdröhnung und/oder Schallbedämmung des Bauteils (2, 6, 7, 9) versehen ist, wobei das Bauteil ein Kunststoffbauteil (2, 6, 7, 9) aus Polypropylen ist und wobei die Bitumenmatte (11a bis 11f) auf das Kunststoffbauteil (2, 6, 7, 9) aus Polypropylen aufgeklebt wird, **dadurch gekennzeichnet, dass** ein gebrauchsfähiges, fließfähiges und reaktiv aushärtungsfähiges bituminöses Gemisch (FAB) derart auf das Kunststoffbauteil (2, 6, 7, 9) aus Polypropylen und/oder auf die Bitumenmatte (11a bis 11f) aufgebracht wird, dass wenigstens eine Klebewulst (23a bis 23d) entsteht, die zumindest teilweise von wenigstens einem von dem reaktiv aushärtungsfähigen bituminösen Gemisch (FAB) unbeaufschlagten Bereich (25, GA) umrandet ist, und indem vor dem Aushärten des reaktiv aushärtungsfähigen bituminösen Gemischs (FAB) das Kunststoffbauteil (2, 6, 7, 9) aus Polypropylen und die Bitumenmatte (11a bis 11f) zusammengedrückt werden.

2. Verfahren nach Anspruch 1, **dadurch gekennzeichnet, dass** die wenigstens eine Klebewulst (23a bis 23d) aus reaktiv aushärtungsfähigem bituminösem Gemisch (FAB) derart ausgebildet und auf die Bitumenmatte (11a bis 11f) und/oder das jeweilig zu entdröhnende und/oder schallzubedämmende Kunststoffbauteil (2, 6; 7, 8) aus Polypropylen aufgebracht wird, dass auch der ursprünglich von dem reaktiv aushärtungsfähigen bituminösen Gemisch (FAB) unbeaufschlagte Bereich (25, GA) nach dem Zusammendrücken des Kunststoffbauteils (2, 6, 7, 9) aus Polypropylen und der Bitumenmatte (11a bis 11f) so bedeckt wird, dass eine im Wesentlichen vollflächige Klebeschicht (13) auf den einander zugewandten Kontaktflächen (GS', GS) des Kunststoffbauteils (2, 6, 7, 9) aus Polypropylen und der Bitumenmatte (11a bis 11f) entsteht.

3. Verfahren nach Anspruch 1 oder 2, **dadurch gekennzeichnet, dass** das reaktiv aushärtungsfähige bituminöse Gemisch (FAB) entweder ausschließlich auf das Kunststoffbauteil (2, 6, 7, 9) aus Polypropylen oder ausschließlich auf die Bitumenmatte (11a bis 11f) vor deren Zusammendrücken aneinander aufgebracht wird.

4. Verfahren nach Anspruch 1, 2 oder 3, **dadurch gekennzeichnet, dass** die jeweilige Klebewulst (23a bis 23d) im Wesentlichen linien-, schnur- oder strangförmig auf das Kunststoffbauteil (2, 6, 7, 9) aus Polypropylen und/oder die diesem jeweilig zugeordnete Bitumenmatte (11a bis 11f) vor deren Zusammendrücken aneinander aufgebracht wird.

5. Verfahren nach einem der vorhergehenden Ansprüche, **dadurch gekennzeichnet, dass** wenigstens eine Klebewulst (23c, 23d) in Form einer einzelnen, zusammenhängenden Raupenbahn, insbesondere mäanderförmig, auf das Kunststoffbauteil (2, 6, 7, 9) aus Polypropylen und/oder die Bitumenmatte (11a bis 11f) vor dem Zusammendrücken des Kunststoffbauteils (2, 6, 7, 9) aus Polypropylen und der Bitumenmatte (11a bis 11f) aufgebracht wird.

6. Verfahren nach Anspruch 5, **dadurch gekennzeichnet, dass** mehrere Klebewülste in Form von mehreren separaten Raupenbahnen auf das Kunststoffbauteil (2, 6, 7, 9) aus Polypropylen und/oder auf die jeweilige Bitumenmatte (11a bis 11f) vor dem Zusammendrücken des Kunststoffbauteils (2, 6, 7, 9) aus Polypropylen und der Bitumenmatte (11a bis 11f) aufgebracht werden.

7. Verfahren nach einem der vorhergehenden Ansprüche, **dadurch gekennzeichnet, dass** vor dem Zusammendrücken des Kunststoffbauteils (2, 6, 7, 9) aus Polypropylen und der Bitumenmatte (11a bis 11f) wenigstens eine Klebewulst (23a, 23b) auf einem Randbereich (14a, 14b) der Klebekontaktfläche (GS', GS) des Kunststoffbauteils (2, 6, 7, 9) aus Polypropylen und/oder der Bitumenmatte (11a bis 11f) derart aufgebracht wird, dass sie den Randbereich (14a, 14b) der jeweiligen Klebekontaktfläche (GS', GS) als teilweise oder ganz geschlossene Masche oder Ringwulst umläuft.

8. Verfahren nach einem der vorhergehenden Ansprüche, **dadurch gekennzeichnet, dass** die Bitumenmatte (11a bis 11f) wenigstens einen abgerundeten Eckbereich (27a bis 27d) aufweist.

9. Verfahren nach Anspruch 8, **dadurch gekennzeichnet, dass** der abgerundete Eckbereich (27a bis 27d) einen Radius von mindestens 2 mm, bevorzugt von mindestens 4 mm, besonders bevorzugt von wenigstens 6 mm, und/oder von höchstens 30 mm, bevorzugt von höchstens 20 mm, besonders bevorzugt von höchstens 15 mm, aufweist.

10. Verfahren nach einem der vorhergehenden Ansprüche, **dadurch gekennzeichnet, dass** wenigstens eine Klebewulst (23a, 23b) derart ausgebildet und aufgebracht wird, dass sie beim Zusammendrücken des Kunststoffbauteils (2, 6, 7, 9) aus Polypropylen und der Bitumenmatte (11a bis 11f) aus einer randkantenseitigen Klebefuge (KF) zwischen dem Kunststoffbauteil (2, 6, 7, 9) aus Polypropylen und der Bitumenmatte (11a bis 11f) hervorquillt und einen Randkantenabschnitt (RKA, RKI) der Bitumenmatte (11a bis 11f) und/oder des Kunststoffbauteils (2, 6, 7, 9) teilweise oder ganz einfasst.

11. Verfahren nach einem der vorhergehenden Ansprüche, **dadurch gekennzeichnet, dass** die mittlere Breite (BKW) der jeweiligen Klebewulst (23a bis 23d) wenigstens 2 mm, bevorzugt wenigstens 4 mm, besonders bevorzugt wenigstens 6 mm, und/oder höchstens 30 mm, bevorzugt höchstens 20 mm, besonders bevorzugt höchstens 15 mm, beträgt.

12. Verfahren nach einem der vorhergehenden Ansprüche, **dadurch gekennzeichnet, dass** der mittlere Abstand (AKW) der Lücke (GA) zweier nebeneinander verlaufender Abschnitte, insbesondere parallel verlaufender Abschnitte, einer der Klebewülste (23c, 23d) oder mehrerer der Klebewülste (23a, 23b, 23c, 23d) wenigstens das 1,0-fache der mittleren Breite (BKW) der einen Klebewulst (23c, 23d) oder der mehreren Klebewülste (23a, 23b, 23c, 23d), bevorzugt wenigstens das 1,2-fache, besonders bevorzugt wenigstens das 1,5-fache, und/oder höchstens das 4,0-fache, bevorzugt höchstens das 3,0-fache, besonders bevorzugt höchstens das 2,0-fache, der mittleren Breite (BKW) der Klebewulst (23c, 23d) oder der Klebewülste (23a, 23b, 23c, 23d) beträgt.

13. Verfahren nach einem der vorhergehenden Ansprüche, **dadurch gekennzeichnet, dass** die aufgebrachte Masse des reaktiv aushärtungsfähigen bituminösen Gemischs (FAB) bezogen auf die dem Kunststoffbauteil (2, 6, 7, 9) aus Polypropylen zugewandte Kontaktfläche der Bitumenmatte (11a bis 11f) wenigstens 0,1 kg/m², bevorzugt wenigstens 0,2 kg/m², besonders bevorzugt wenigstens 0,3 kg/m², und/oder höchstens 2,0 kg/m², bevorzugt höchstens das 1,2 kg/m², besonders bevorzugt höchstens 0,8 kg/m², beträgt.

14. Verfahren nach einem der vorhergehenden Ansprüche, **dadurch gekennzeichnet, dass** die Zeit zwischen der Herstellung des gebrauchsfähigen, fließfähigen und reaktiv aushärtungsfähigen bituminösen Gemischs (FAB) und dem Zusammendrücken des Kunststoffbauteils (2, 6, 7, 9) aus Polypropylen und der Bitumenmatte (11a bis 11f) höchstens 90 s, bevorzugt höchstens 75 s, besonders bevorzugt höchstens 60 s, beträgt.

15. Verfahren nach einem der vorhergehenden Ansprüche, **dadurch gekennzeichnet, dass** das gebrauchsfähige, fließfähige und reaktiv aushärtungsfähige bituminöse Gemisch (FAB) hergestellt wird, indem eine Mischung aus mindestens einer ersten Komponente (K1) und aus mindestens einer zweite Komponente (K2) gebildet wird,
wobei die erste Komponente (K1) ein Basisbindemittel, ein Fluxöl und einen Reaktivzusatz enthält, welche so aufeinander abgestimmt sind, dass zum Aushärten ein Aktivator erforderlich ist, und wobei die zweite Komponente (K2) den Aktivator enthält; oder
wobei die erste Komponente (K1) ein Basisbindemittel und ein Fluxöl enthält, welche so aufeinander abgestimmt sind, dass zum Aushärten ein Reaktivzusatz erforderlich ist, und wobei die zweite Komponente (K2) den Reaktivzusatz enthält; oder
wobei die erste Komponente (K1) ein Basisbindemittel und ein Fluxöl enthält, welche so aufeinander abgestimmt sind, dass zum Aushärten ein Reaktivzusatz und ein Aktivator erforderlich sind, und wobei die zweite Komponente (K2) den Reaktivzusatz und den Aktivator enthält.

16. Verfahren nach einem der vorhergehenden Ansprüche, **dadurch gekennzeichnet, dass** das Kunststoffbauteil (2, 6, 7, 9) aus Polypropylen ein Wandungsteil (2, 6, 7, 9) zum Begrenzen einer Spülkammer (10) der Geschirrspülmaschine ist.

17. Geschirrspülmaschine, insbesondere Haushaltsgeschirrspülmaschine, mit wenigstens einem Bauteil (2, 6, 7, 9), welches mit wenigstens einer, insbesondere vorkonfektionierten, Bitumenmatte (11a bis 11f) zur Entdröhnung und/oder Schallbedämmung des Bauteils (2, 6, 7, 9) versehen ist, **dadurch gekennzeichnet, dass** das Bauteil ein Kunststoffbauteil (2, 6, 7, 9) aus Polypropylen ist und dass die Geschirrspülmaschine, insbesondere Haushaltsgeschirrspülmaschine, durch ein Verfahren nach einem der Ansprüche 1 bis 16 hergestellt ist.

18. Geschirrspülmaschine nach Anspruch 17, **dadurch gekennzeichnet, dass** das Kunststoffbauteil (2, 6, 7, 9) aus Polypropylen und die Bitumenmatte (11a bis 11f) mittels wenigstens einer Klebewulst (23a bis 23d) aus einem im gebrauchsfertigen Zustand fließfähigen und reaktiv aushärtungsfähigen bituminösen Gemisch (FAB) miteinander verklebt sind.

## Claims

1. Method for manufacturing a dishwasher, especially a household dishwasher, with at least one component (2, 6, 7, 9), which is provided with at least one bitumen mat (11a-f), especially a prefabricated bitumen mat (11a to 11f), for noise deadening and/or sound insulation of the component (2, 6, 7, 9), wherein the component is a plastic component (2, 6, 7, 9) made of polypropylene and wherein the bitumen mat (11a to 11f) is glued to the plastic component (2, 6, 7, 9) made of polypropylene, **characterised in that** a usable, flowable and reactively-hardenable bituminous mixture (FAB) is applied to the plastic component (2, 6, 7, 9) made of polypropylene and/or to the bitumen mat (11a to 11f) such that at least one adhesive bead (23a to 23d) is produced, which is partly surrounded by at least one area (25, GA) to which the reactively-hardenable bituminous mixture (FAB) has not been applied, and **in that**, before the reactively-hardenable bituminous mixture (FAB) hardens, the plastic component (2, 6, 7, 9) made of polypropylene and the bitumen mat (11a to 11f) are pressed together.

2. Method according to claim 1, **characterised in that** the at least one adhesive bead (23a to 23d) is embodied from the reactively-hardenable bituminous mixture (FAB) and applied to the bitumen mat (11a to 11f) and/or to the respective plastic component (2, 6, 7, 8) made of polypropylene for which noise is to be deadened and/or sound insulated such that the area (25, GA) to which the bituminous mixture has not been originally applied, after the pressing together of the plastic component (2, 6, 7, 9) made of polypropylene and the bitumen mat (11a to 11f), is covered so that an essentially fall-surface adhesive layer (13) is produced on the contact surfaces (GS', GS) of the plastic component (2, 6, 7, 9) made of polypropylene and the bitumen mat (11a to 11f) facing towards one another.

3. Method according to claim 1 or 2, **characterised in that** the hardenable bituminous mixture (FAB) is either applied exclusively to the plastic component (2, 6, 7, 9) made of polypropylene or exclusively to the bitumen mat (11a to 11f) before the two are pressed together.

4. Method according to claim 1, 2 or 3, **characterised in that** the respective adhesive bead (23a to 23d) is applied substantially in the form of a line, a cord or a strand to the plastic component (2, 6, 7, 9) made of polypropylene and/or to its respective assigned bitumen mat (11a to 11f) before they are pressed together.

5. Method according to one of the preceding claims, **characterised in that** at least one adhesive bead (23c, 23d) in the form of a single continuous bead track, is applied, especially in a serpentine shape, to the plastic component (2, 6, 7, 9) made of polypropylene and/or the bitumen mat (11a to 11f) before the plastic component (2, 6, 7, 9) made of polypropylene and the bitumen mat (11a to 11f) are pressed together.

6. Method according to claim 5, **characterised in that** a number of adhesive beads in the form of the number of separate bead tracks are applied to the plastic component (2, 6, 7, 9) made of polypropylene and/or to the respective bitumen mat (11a to 11f) before the plastic component (2, 6, 7, 9) made of polypropylene and the bitumen mat (11a to 11f) are pressed together.

7. Method according to one of the preceding claims, **characterised in that,** before the plastic component (2, 6, 7, 9) made of polypropylene and the bitumen mat (11a to 11f) are pressed together, at least one adhesive bead (23a, 23b) is applied to an edge area (14a, 14b) of the adhesive contact surface (GS', GS) of the plastic component (2, 6, 7, 9) made of polypropylene and/or of the bitumen mat (11a to 11f) such that it surrounds the edge area (14a, 14b) of the respective adhesive contact surface (GS', GS) as a partly or entirely closed mesh or ring bead.

8. Method according to one of the preceding claims, **characterised in that** the bitumen mat (11a to 11f) has at least one rounded-off corner area (27a to 27d).

9. Method according to claim 8, **characterised in that** the rounded-off corner area (27a to 27d) has a radius of at least 2 mm, preferably of at least 4 mm, especially preferably of at least 6 mm, and/or of that most 30 mm, preferably at most 20 mm, especially preferably at most 15 mm.

10. Method according to one of the preceding claims, **characterised in that** at least one adhesive bead (23a, 23b) is embodied and applied such that, when the plastic component (2, 6, 7, 9) made of polypropylene and the bitumen mat (11a- to 1f) are pressed together, it squeezes out of an edge-side adhesive joint (KF) between the plastic component (2, 6, 7, 9) made of polypropylene and the bitumen mat (11a to 11f) and encloses an edge section (RKA, RKI) of the bitumen mat (11a to 11f) and/or of the plastic component (2, 6, 7, 9) made of polypropylene partly or entirely.

11. Method according to one of the preceding claims, **characterised in that** the average width (BKW) of the respective adhesive bead (23a to 23d) amounts to at least 2 mm, preferably at least 4 mm, especially preferably at least 6 mm, and/or at most 30 mm, preferably at most 20 mm, especially preferably at most 15 mm.

12. Method according to one of the preceding claims, **characterised in that** the average distance (AKW) of the gap (GA) between two sections running alongside one another, especially sections running in parallel to one another, of one of the adhesive beads (23c, 23d) or of the number of the adhesive beads (23a, 23b, 23c, 23d) amounts to at least 1.0 times the average width (BKW) of the one adhesive bead (23c, 23d) or of the number of adhesive beads (23a, 23b, 23c, 23d), preferably at least 1.2 times, especially preferably at least 1.5 times, and/or the most 4.0 times, especially at most 3.0 times, especially preferably at most 2.0 times the average width (BKW) of the adhesive bead (23c, 23d) or of the adhesive beads (23a, 23b, 23c, 23d).

13. Method according to one of the preceding claims, **characterised in that** the applied mass of the reactively-hardenable bituminous mixture (FAB) in relation to the contact surface of the bitumen mat (11a to 11f) facing towards the plastic component (2, 6, 7, 9) made of polypropylene amounts to at least 0.1 kg/m², preferably at least 0.2 kg/m², preferably at least 0.3 kg/m² and/or at most 2.0 kg/m², preferably at most 1.2 kg/m², especially preferably at most 0.8 kg/m².

14. Method according to one of the preceding claims **characterised in that** the time between the production of the usable, flowable and reactively-hardenable bituminous mixture (FAB) and the pressing together of the plastic component (2, 6, 7, 9) made of polypropylene and the bitumen mat (11a to 11f) amounts to at most 90 sec, preferably at most 75 sec, especially preferably at most 60 sec.

15. Method according to one of the preceding claims, **characterised in that** the usable, flowable and reactively-hardenable bituminous mixture (FAB) is produced by mixture of at least one first component (K1) and at least one second component (K2) being formed,
wherein the first component (K1) contains a basic binder, a flux oil and a reactive additive which are tailored to each other so that an activator is required for hardening, and wherein the second component (K2) contains the activator; or
wherein the first component (K1) contains a basic binder and a flux oil which are tailored to each other so that reactive additive is required the hardening, and wherein the second component (K2) contains the reactive additive; or
wherein the first component (K1) contains a basic binder and a flux oil which are tailored to each other so that reactive additive and an activator are required for hardening, and wherein the second component (K2) contains the reactive additive and the activator.

16. Method according to one of the preceding claims, **characterised in that** the plastic component (2, 6, 7, 9) made of polypropylene is a walling section (2, 6, 7, 9) for delimiting a washing compartment (10) of the dishwasher.

17. Dishwasher, especially a household dishwasher with at least one component (2, 6, 7, 9), which is provided with a least one, especially prefabricated, bitumen mat (11a to 11f) for noise deadening and/or deadening sound of the component (2, 6, 7, 9), **characterised in that** the component is a plastic component (2, 6, 7, 9) made of polypropylene and that the dishwasher, especially a household dishwasher, is produced by a method according to one of claims 1 to 16.

18. Dishwasher, according to claim 17, **characterised in that** the plastic component (2, 6, 7, 9) made of polypropylene and the bitumen mat (11a to 11f) are glued to each other by means that least one adhesive bead (23a to 23d) made of a bituminous mixture (FAB) that is flowable and reactively-hardenable in the ready-to-use state.

## Revendications

1. Procédé destiné à la fabrication d'un lave-vaisselle, en particulier d'un lave-vaisselle domestique, avec au moins un composant (2, 6, 7, 9), lequel est équipé d'au moins une plaque de bitume (11a-f), en particulier d'une plaque de bitume préconfectionnée (11a à 11f), destinée à l'amortissement et/ou à l'insonorisation du composant (2, 6, 7, 9), dans lequel le composant est un composant en matière plastique (2, 6, 7, 9) en polypropylène et dans lequel la plaque de bitume (11a à 11f) est collée sur le composant en matière plastique (2, 6, 7, 9) à base de polypropylène, **caractérisé en ce qu'**un mélange de bitume facile d'utilisation, fluide et durcissable de manière réactive (FAB) est appliqué sur le composant en matière plastique (2, 6, 7, 9) à base de polypropylène et/ou sur la plaque de bitume (11a à 11f) de telle sorte qu'au moins un bourrelet de colle (23a à 23d) est formé, lequel est bordé au moins en partie par au moins une zone (25, GA) non alimentée en mélange de bitume durcissable de manière réactive (FAB), et notamment avant le durcissement du mélange de bitume durcissable de manière réactive (FAB) le composant en matière plastique (2, 6, 7, 9) à base de polypropylène et la plaque de bitume (11a à 11f) sont comprimés.

2. Procédé selon la revendication 1, **caractérisé en ce que** l'au moins un bourrelet de colle (23a à 23d) à base de mélange de bitume durcissable de manière réactive (FAB) est réalisé et appliqué sur la plaque de bitume (11a à 11f) et/ou le composant en matière plastique (2, 6, 7, 9) à amortir et/ou à insonoriser à base de polypropylène de telle sorte que la zone (25, GA) non alimentée en mélange de bitume durcissable de manière réactive (FAB) après la compression du composant en matière plastique (2, 6, 7, 9) à base de polypropylène et de la plaque de bitume (11a à 11f) est recouverte de sorte qu'une couche de colle sensiblement sur toute la surface (13) est formée sur les surfaces de contact tournées l'une vers l'autre (GS', GS) du composant en matière plastique (2, 6, 7, 9) à base de polypropylène et de la plaque de bitume (11a à 11f).

3. Procédé selon la revendication 1 ou 2, **caractérisé en ce que** le mélange de bitume durcissable de manière réactive (FAB) est appliqué soit exclusivement sur le composant en matière plastique (2, 6, 7, 9) à base de polypropylène ou exclusivement sur la plaque de bitume (11a à 11f) avant leur compression l'un sur l'autre.

4. Procédé selon la revendication 1, 2 ou 3, **caractérisé en ce que** le bourrelet de colle respectif (23a à 23d) est appliqué sensiblement sous forme de lignes, de cordons ou de barres sur le composant en matière plastique (2, 6, 7, 9) à base de polypropylène et/ou la plaque de bitume (11a à 11f) associée respectivement à celui-ci est appliquée avant leur compression l'un sur l'autre.

5. Procédé selon l'une des revendications précédentes, **caractérisé en ce qu'**au moins un bourrelet de colle (23c, 23d) sous la forme d'une bande chenillée individuelle d'un seul tenant, en particulier en forme de méandre, est appliqué sur le composant en matière plastique (2, 6, 7, 9) à base de polypropylène et/ou la plaque de bitume (11a à 11f) avant la compression du composant en matière plastique (2, 6, 7, 9) à base de polypropylène et de la plaque de bitume (11a à 11f).

6. Procédé selon la revendication 5, **caractérisé en ce que** plusieurs bourrelets de colle sous la forme de plusieurs bandes chenillées séparées sont appliqués sur le composant en matière plastique (2, 6, 7, 9) à base de polypropylène et/ou sur la plaque de bitume respective (11a à 11f) avant la compression du composant en matière plastique (2, 6, 7, 9) à base de polypropylène et de la plaque de bitume (11a à 11f).

7. Procédé selon l'une des revendications précédentes, **caractérisé en ce que,** avant la compression du composant en matière plastique (2, 6, 7, 9) à base de polypropylène et de la plaque de bitume (11a à 11f), au moins un bourrelet de colle (23a, 23b) est appliqué sur une zone de bord (14a, 14b) de la surface de contact avec la colle (GS', GS) du composant en matière plastique (2, 6, 7, 9) à base de polypropylène et/ou de la plaque de bitume (11a à 11f) de telle sorte qu'il encercle la zone de bord (14a, 14b) de la surface de contact avec la colle respective (GS', GS) en tant que maille fermée en partie ou en totalité ou bourrelet circulaire.

8. Procédé selon l'une des revendications précédentes, **caractérisé en ce que** la plaque de bitume (11a à 11f) présente au moins une zone en coin arrondie (27a à 27d).

9. Procédé selon la revendication 8, **caractérisé en ce que** la zone en coin arrondie (27a à 27d) présente un rayon d'au moins 2 mm, de préférence d'au moins 4 mm, plus préférablement d'au moins 6 mm et/ou d'au plus 30 mm, de préférence d'au plus 20 mm, plus préférablement d'au plus 15 mm.

10. Procédé selon l'une des revendications précédentes, **caractérisé en ce qu'**au moins un bourrelet de colle (23a, 23b) est réalisé et appliqué de telle sorte qu'il jaillit lors de la compression du composant en matière plastique (2, 6, 7, 9) à base de polypropylène et de la plaque de bitume (11a à 11f) à partir d'un joint de colle côté arête de bord (KF) entre le composant en matière plastique (2, 6, 7, 9) à base de polypropylène et la plaque de bitume (11a à 11f) et encadre en partie ou en totalité une section d'arête de bord (RKA, RKI) de la plaque de bitume (11a à 11f) et/ou du composant en matière plastique (2, 6, 7, 9).

11. Procédé selon l'une des revendications précédentes, **caractérisé en ce que** la largeur moyenne (BKW) du bourrelet de colle respectif (23a à 23d) représente au moins 2 mm, de préférence au moins 4 mm, plus préférablement au moins 6 mm et/ou au plus 30 mm, de préférence au plus 20 mm, plus préférablement au plus 15 mm.

12. Procédé selon l'une des revendications précédentes, **caractérisé en ce que** l'écart moyen (AKW) de l'espace (GA) de deux sections adjacentes, en particulier de sections parallèles, de l'un des bourrelets de colle (23c, 23d) ou de plusieurs des bourrelets de colle (23a, 23b, 23c, 23d) représente au moins 1,0 fois la largeur moyenne (BKW) de l'un bourrelet de colle (23c, 23d) ou des plusieurs bourrelets de colle (23a, 23b, 23c, 23d), de préférence au moins 1,2 fois, plus préférablement au moins 1,5 fois et/ou au plus 4,0 fois, de préférence au plus 3,0 fois, plus préférablement au plus 2,0 fois, la largeur moyenne (BKW) du bourrelet de colle (23c, 23d) ou des bourrelets de colle (23a, 23b, 23c, 23d).

13. Procédé selon l'une des revendications précédentes, **caractérisé en ce que** la masse appliquée du mélange de bitume durcissable de manière réactive (FAB) par rapport à la surface de contact de la plaque de bitume (11a à 11f) tournée vers le composant en matière plastique (2, 6, 7, 9) à base de polypropylène représente au moins 0,1 kg/m², de préférence au moins 0,2 kg/m², plus préférablement au moins 0,3 kg/m² et/ou au plus 2,0 kg/m², de préférence au plus 1,2 kg/m², plus préférablement au plus 0,8 kg/m².

14. Procédé selon l'une des revendications précédentes, **caractérisé en ce que** le temps entre la fabrication du mélange de bitume facile d'utilisation, fluide et durcissable de manière réactive (FAB) et la compression du composant en matière plastique (2, 6, 7, 9) à base de polypropylène et la plaque de bitume (11a à 11f) représente au plus 90 s, de préférence au plus 75 s, plus préférablement au plus 60 s.

15. Procédé selon l'une des revendications précédentes, **caractérisé en ce que** le mélange de bitume facile d'utilisation, fluide et durcissable de manière réactive (FAB) est fabriqué en formant un mélange sur la base d'au moins un premier constituant (K1) et sur la base d'au moins un second constituant (K2),
dans lequel le premier constituant (K1) contient un liant de base, une huile de fluxage et un adjuvant réactif qui sont coordonnés de sorte que pour le durcissement un activateur est nécessaire, et dans lequel le second constituant (K2) contient l'activateur ; ou
dans lequel le premier constituant (K1) contient un liant de base et une huile de fluxage qui sont coordonnés de sorte que pour le durcissement un adjuvant réactif est nécessaire, et dans lequel le second constituant (K2) contient l'adjuvant réactif ; ou
dans lequel le premier constituant (K1) contient un liant de base et une huile de fluxage qui sont coordonnés de sorte que pour le durcissement un adjuvant réactif et un activateur sont nécessaires, et dans lequel le second constituant (K2) contient l'adjuvant réactif et l'activateur.

16. Procédé selon l'une des revendications précédentes, **caractérisé en ce que** le composant en matière plastique (2, 6, 7, 9) à base de polypropylène est une partie formant paroi (2, 6, 7, 9) destinée à la délimitation d'une chambre de lavage (10) du lave-vaisselle.

17. Lave-vaisselle, en particulier lave-vaisselle domestique, avec au moins un composant (2, 6, 7, 9), lequel est équipé au moins d'une plaque de bitume (11a à 11f), en particulier préconfectionnée, destinée à l'amortissement et/ou à l'insonorisation du composant (2, 6, 7, 9), **caractérisé en ce que** le composant est un composant en matière plastique (2, 6, 7, 9) à base de polypropylène et **en ce que** le lave-vaisselle, en particulier le lave-vaisselle domestique, est fabriqué par le biais d'un procédé selon l'une des revendications 1 à 16.

18. Lave-vaisselle selon la revendication 17, **caractérisé en ce que** le composant en matière plastique (2, 6, 7, 9) à base de polypropylène et la plaque de bitume (11a à 11f) sont collés l'un à l'autre au moyen d'au moins un bourrelet de colle (23a à 23d) à base d'un mélange de bitume fluide et durcissable de manière réactive à l'état facile d'utilisation (FAB).
